Europäisches Patentamt

European Patent Office

Office européen des brevets

(19)

(11) Veröffentlichungsnummer: **0 340 639**

**A1**

(12) **EUROPÄISCHE PATENTANMELDUNG**

(21) Anmeldenummer: **89107650.7**

(22) Anmeldetag: **27.04.89**

(51) Int. Cl.4: **B23P 21/00 , B23Q 7/14 , B65G 35/06**

(30) Priorität: **30.04.88 DE 3814676**

(43) Veröffentlichungstag der Anmeldung:
**08.11.89 Patentblatt 89/45**

(84) Benannte Vertragsstaaten:
**AT BE CH DE ES FR GB GR IT LI LU NL SE**

(71) Anmelder: **Kumeth, Siegmund**
**Wernher-von-Braun-Strasse 5**
**Industriegebiet Nord**
**D-8450 Amberg(DE)**

(72) Erfinder: **Kumeth, Siegmund**
**Wernher-von-Braun-Strasse 5**
**Industriegebiet Nord**
**D-8450 Amberg(DE)**

(74) Vertreter: **Graf, Helmut, Dipl.-Ing. et al**
**Greflinger Strasse 7 Postfach 382**
**D-8400 Regensburg(DE)**

(54) **Montageanlage.**

(57) Die Erfindung bezieht sich auf eine Montageanlage für Bauteile oder Baugruppen, insbes. für Klein-
und Kleinstbauteile oder -Baugruppen, mit mehreren
in räumlichem Abstand voneinander angeordneten
Arbeitsstationen, mit mehreren Aufnahmen für Werkstücke oder Werkstückteile sowie mit einem Transportsystem, mit welchem die Aufnahmen an den
Arbeitsstationen nacheinander vorbeibewegt werden.

Die Erfindung zeichnet sich dadurch aus, daß
das Transportsystem von an den Arbeitsstationen
(1a-1i;45a-45d) vorgesehenen Hauptförderern (9, 43)
sowie von zwischen den Arbeitsstationen vorgesehenen Hilfsförderstrecken oder Zwischenförderern (10,
11, 46, 47, 108) gebildet ist, und daß jeder Hauptförderer mit eigenem Antrieb oder Antriebssystem (13,
14, 77) als voll funktionsfähiges Element ausgebildet
ist.

Fig.1

## Montageanlage

Die Erfindung bezieht sich auf eine Montageanlage, insbesondere für Klein- oder Kleinstbauelemente oder -baugruppen, gemäß Oberbegriff Patentanspruch 1.

Unter "Klein- oder Kleinstbauelemente oder -baugruppen" sind insbesondere mechanische und/oder elektrische Bauelemente oder Baugruppen mit geringen Abmessungen zu verstehen, die auch aus Einzelteilen mit kleinen Abmessungen montiert bzw. zusammengebaut sind.

Montageanlagen sind an sich in zahlreichen Ausführungen bekannt und dienen zum maschinellen Herstellen, d.h. zur maschinellen Montage von Produkten unterschiedlichster Art aus Einzelteilen bzw. -komponenten, die den einzelnen Arbeitsstationen jeweils zugeführt werden. Die schrittweise Montage oder Fertigstellung des jeweiligen Produktes erfolgt dabei zumindest hauptsächlich auf den sich an den Arbeitsstationen vorbeibewegenden Aufnahmen, wobei jede Arbeitsstation an dem ihr mit der jeweiligen Aufnahme zugeführten Werkstück oder Werkstückteil den dieser Arbeitsstation zugeordneten Arbeitsschritt durchführt, der ein Montageschritt, Prüfschritt usw. sein kann, worauf dann die betreffende Aufnahme mit dem auf ihr gehaltenen Werkstück oder Werkstückteil an eine weitere Arbeitsstation bewegt wird.

Bei den bisher üblichen Montageanlagen bzw. -automaten sind die Aufnahmen in der Regel an einem von einem Rotor gebildeten Transportsystem vorgesehen, so daß sämtliche Aufnahmen der Anlage zu jedem Zeitpunkt jeweils die gleiche Bewegung durchführen und sich für sämtliche Aufnahmen an den einzelnen Arbeitsstationen auch jeweils die gleiche Stillstandszeit ergibt, innerhalb der die Arbeitsschritte an allen Stationen durchgeführt werden, d.h. die jeweilige Stillstandszeit ist mindestens gleich der längsten, an einer Arbeitsstation benötigten Arbeitszeit. Hierdurch sind einer Optimierung solcher Montageautomaten bzw. -anlagen, vor allem auch in antriebsmäßiger sowie in leistungsmäßiger Hinsicht enge Grenzen gesetzt.

Die Anzahl der benötigten Arbeitsschritte und damit auch die Anzahl der benötigten Arbeitsstationen sind produkt-spezifisch, d.h. sie können von Produkt zu Produkt sehr unterschiedlich sein. Auch eine optimale Anpassung des Transportsystems (Rotor) an eine unterschiedliche Anzahl von Arbeitsstationen läßt sich bei dem bisherigen Konstruktionsprinzip zumindest dann nicht verwirklichen, wenn ein bereits bestehendes und in der Praxis bewährtes Konzept für einen Montageautomaten nicht vollständig geändert werden soll.

Der Erfindung liegt die Aufgabe zugrunde, eine Montageanlage aufzuzeigen, die hinsichtlich ihres Transportsystemes und der benötigten Anzahl an Arbeitsstationen dem jeweils herzustellenden Produkt ohne großen konstruktiven Aufwand optimal angepaßt werden kann.

Zur Lösung dieser Aufgabe ist eine Montageanlage entsprechend dem kennzeichnenden Teil des Patentanspruches 1 ausgebildet. Bei der erfindungsgemäßen Montageanlage bilden die Hauptförderer für die Arbeitsstationen, aber auch die Hilfsförderer, die zwischen den einzelnen Arbeitsstationen vorgesehen werden, jeweils getrennte, voll funktionsfähige und standardisierte Elemente bzw. Baugruppen, die baukastenartig dem jeweiligen Anwendungsfall entsprechend zusammengestellt werden können. Es ist dann nur noch notwendig, die einzelnen Arbeitsstationen hinsichtlich ihrer Arbeitselemente (Werkzeuge usw.) dem jeweiligen Arbeitsgang entsprechend auszubilden, wobei auch hier weitestgehend auf bereits vorhandene Konstruktionen oder bereits entwickelte und im Einsatz bewährte Konstruktionselemente (beispielsweise Zuführungen für Federn, Schrauben, Nieten usw., bestimmte Greifer bzw. Zangen-Anordnungen) zurückgegriffen werden kann.

Ein besonderer Vorteil der erfindungsgemäßen Montageanlage besteht auch darin, daß die Bewegung der Aufnahmen an den einzelnen Arbeitsstationen nicht zwangsläufig und gleichsinnig mit den Bewegungen an den übrigen Arbeitsstationen erfolgt, sondern an jeder Arbeitsstation kann durch den dortigen Hauptförderer die jeweilige Aufnahme individuell bewegt werden, was insbesondere auch bedeutet, daß nicht nur unterschiedliche Standzeiten an den einzelnen Arbeitsstationen für die Aufnahmen möglich sind, sondern diese Aufnahmen können auch an jeder Arbeitsstation (unabhängig von der Bewegung der Aufnahmen an den übrigen Arbeitsstationen) in kleinen Schritten vor- und zurückbewegt werden, so daß auf diese Weise von den Aufnahmen Bewegungsvorgänge übernommen werden können, die sonst von den an den Arbeitsstationen vorgesehenen Werkzeugen durchgeführt werden müßten. So ist es beispielsweise möglich, durch schrittweises Weiterbewegen einer Aufnahme an einer Arbeitsstation dort gleiche oder unterschiedliche Teile nacheinander in ein auf der Aufnahme befindliches Werkstück oder Werkstückteil einzubringen, beispielsweise Stecker einer Steckerleiste usw. zu montieren.

Weiterhin ist es mit der erfindungsgemäßen Ausbildung auch möglich, an den einzelnen Arbeitsstationen mit den Aufnahmen jeweils unterschiedliche Positionen anzufahren, so daß es bei mehreren an den Aufnahmen vorgesehenen Werkstückträgern auch möglich ist, mit jeweils den glei-

chen Aufnahmen an unterschiedlichen Werkstück-trägern unterschiedliche Produkte oder Werkstücke zu montieren.

Schließlich ist es bei der erfindungsgemäßen Montageanlage auch möglich, bei einem Defekt in einer Arbeitsstation diese aus der Anlage zu entfernen und durch eine ordnungsgemäß arbeitende Arbeitsstation oder aber (vorübergehend bis zur Reparatur der defekten Arbeitsstation) durch einen Hand-Montageplatz zu ersetzen.

Weiterbildungen der Erfindung sind Gegenstand der Unteransprüche.

Die Erfindung wird im folgenden anhand der Figuren an Ausführungsbeispielen näher erläutert. Es zeigen:

Fig. 1 in schematischer Darstellung und in Draufsicht eine Montageanlage gemäß der Erfindung;

Fig. 2 in schematischer Darstellung und in Seitenansicht zwei in Förderrichtung der Montageanlage aufeinanderfolgend angeordnete Montage- oder Arbeitsstationen der Montageanlage gemäß Fig. 1, zusammen mit Zwischenförderern;

Fig. 3 in schematischer Darstellung und Draufsicht den Hauptförderer einer Arbeitsstation;

Fig. 4 einen Schnitt entsprechend der Linie I-I der Fig. 3, zusammen mit einer an dem Hauptförderer vorgesehenen Aufnahme;

Fig. 5 eine Draufsicht auf die Aufnahme gemäß Fig. 4;

Fig. 6 in schematischer Darstellung den Antrieb für den Hauptförderer der Arbeitsstationen;

Fig. 7 in vereinfachter, vergrößerter Teildarstellung ein Ende eines der geradlinigen Zwischenförderer;

Fig. 8 einen Schnitt entsprechend der Linie II-II der Fig. 7;

Fig. 9 in schematischer Darstellung und in Draufsicht ein als Abzweigung bzw. Weiche ausgebildeter Zwischenförderer;

Fig. 10 in schematischer Darstellung und in Draufsicht den Hauptförderer einer Arbeitsstation bei einer weiteren, bevorzugten Ausführungsform der Erfindung;

Fig. 11 einen Schnitt entsprechend der Linie III-III der Fig. 10, zusammen mit einer an dem Hauptförderer vorgesehenen Aufnahme;

Fig. 12 in vergrößerter Teildarstellung das in Bewegungsrichtung der Aufnahmen vordere Ende (Einlauf) des Hauptförderers gemäß Fig. 10;

Fig. 13 in schematischer Darstellung und in Draufsicht einen Hauptförderer nach Fig. 10, zusammen mit einem in Förder- bzw. Transportrichtung vorausgehenden Zwischenförderer, sowie zusammen mit verschiedenen Steuer- und Antriebselementen zur Steuerung des Hauptförderers und Zwischenförderers;

Fig. 14 in ähnlicher Darstellung wie Fig. 8 ein Zwischenförderer zur Verwendung in Verbindung mit Hauptförderern gemäß Fig. 10;

Fig. 15 den Zwischenförderer nach Fig. 14 in Seitenansicht;

Fig. 16 in schematischer Darstellung und in Draufsicht eine als Wendebogen ausgebildete kurvengängige Förderstrecke zur Verwendung bei einer Hauptförderer sowie Zwischenförderer nach den Figuren 10 bzw. 14 aufweisenden Montageanlage;

Fig. 17 in schematischer Darstellung und in Draufsicht eine Montageanlage, deren Transportsystem bzw. Transfereinrichtung aus mehreren gleichartigen, jeweils einen Hauptförderer und einen Hilfsförderer aufweisenden Modulen gebildet ist;

Fig. 18 in vereinfachter perspektivischer Darstellung ein Modul des Transport- bzw. Transfersystems der Montageanlage gemäß Fig. 17;

Fig. 19 in vergrößerter Teildarstellung eine abgewandelte Aufnahme;

Fig. 20 und 21 jeweils in schematischer Teildarstellung und Draufsicht eine Teillänge des Transportsystems einer Montageanlage.

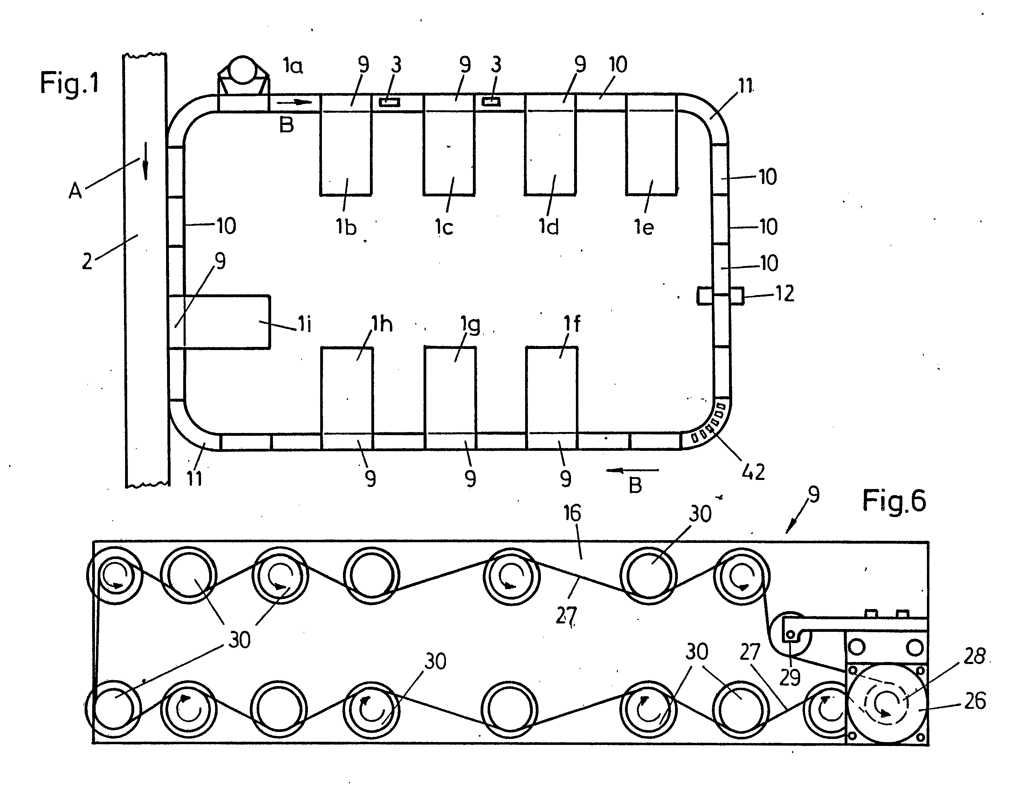

In der Fig. 1 ist eine Montageanlage dargestellt, die mehrere, in dieser Figur allgemein mit 1a - 1i bezeichnete Arbeits- bzw. Montagestationen aufweist, denen die unterschiedlichsten Montage- und/oder Arbeitsvorgänge (einschließlich evtl. Prüfvorgänge, Entfernen von falschen Teilen, nicht ordnungsgemäß montierter Teile oder Baugruppen, Verpacken des hergestellten Produktes usw.) zugeordnet sind, und zwar entsprechend dem jeweils aus vorgefertigten Einzelteilen bzw. Bauelementen oder Baugruppen zu montierenden Produkt, wobei bei der dargestellten Ausführungsform die Montage des herzustellenden Produktes an der Arbeitsstation 1a beginnt und das fertiggestellte Produkt an der Arbeitsstation 1i an ein sich an der Montageanlage in Richtung des Pfeiles A vorbeibewegendes Transportband 2 zum Abführen der fertiggestellten Produkte übergeben wird.

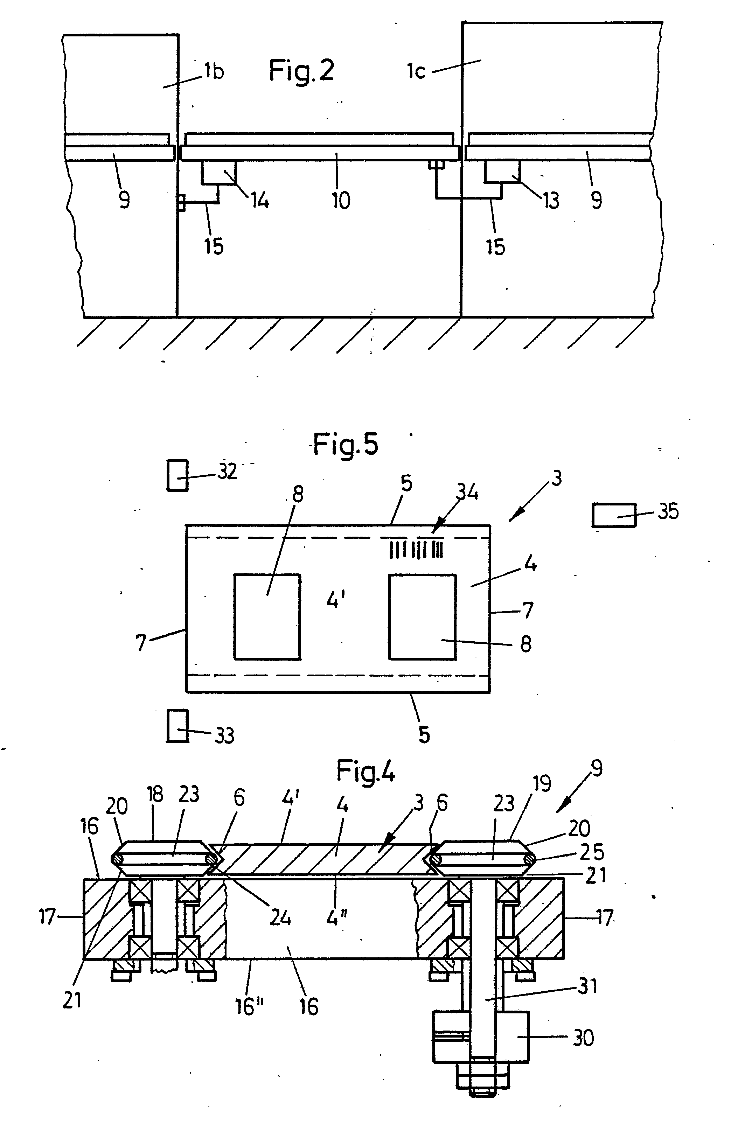

Die sukzessive Montage des gewünschten Produktes erfolgt auf Aufnahmen 3, die mit Hilfe eines Transportsystems in Richtung des Pfeiles B auf einer in sich geschlossenen Bewegungsbahn an den einzelnen Arbeitsstationen 1a - 1i vorbeibewegt werden. Entsprechend den Fig. 4 und 5 sind diese Aufnahmen 3, von denen eine Vielzahl bei der Montageanlage verwendet ist, als im wesentlichen rechteckförmigen Platten 4 ausgebildet, die mit ihrer Oberseite 4' und ihrer Unterseite 4" jeweils in einer vertikalen Ebene angeordnet sind und an ihren in Bewegungs- bzw. Transportrichtung B. liegenden Längsseiten 5 mit jeweils einer, sich über die gesamte Länge dieser Längsseite 5 erstreckenden und im Querschnitt V-förmigen Nut 6 versehen sind, die zu der jeweiligen Längsseite 5, aber auch zu den beiden Stirnseiten 7 der jeweiligen plattenförmigen Aufnahme 3 hin offen ist. An der Oberseite 4 besitzt jede Aufnahme 3 eine Werkstückhalterung 8, die an das jeweilige Produkt angepaßt beliebig ausgebildet sein kann und im einfachsten Fall eine nestförmige Vertiefung ist. Bie der dargestellten Ausführungsform besitzt jede Aufnahme 3 zwei derartige, gegeneinander versetzte Werkstückhalterungen 8 unterschiedlicher Ausbildung, so daß mit den gleichen Aufnahmen 3 lediglich durch unterschiedliche Positionierung an den einzelnen Arbeitsstationen 1a - 1i zumindest zwei unterschiedliche Produkte hergestellt werden können. Selbstverständlich können an den Aufnahmen 3 auch mehr als zwei Werkstückhalterungen 8 vorgesehen sein. Weiterhin können die verschiedenen, an den Aufnahmen 3 vorgesehenen Werkstückhalterungen 8 auch beispielsweise dazu verwendet werden, um an einer Arbeitsstation auf eine noch nicht belegte Werkstückhalterung 8 bereits ein Bauteil oder eine aus mehreren Bauteilen bestehende Baugruppe aufzubringen, welches bzw. welche dann erst in einer der nachfolgenden Arbeitsstationen mit einem an einer anderen Werkstückhalterung 8 der Aufnahme 3 vorgesehenen Baugruppe montiert wird oder zusammen mit dieser Baugruppe gemeinsam verpackt wird usw.

Obwohl die einzelnen Arbeitsstationen 1a - 1i hinsichtlich ihrer Werkzeuge usw. dem jeweils durchzuführenden Arbeitsschritt unterschiedlich ausgebildet sind, weisen diese, hinsichtlich ihres Rahmens oder Vorrichtungsgestells vorzugsweise normierten bzw. standardisierten Arbeitsstationen 1a - 1i einen Hauptförderer 9 auf, der bei allen Arbeitsstationen 1a - 1i identisch ausgebildet ist und nachfolgend noch näher erläutert wird.

Die einzelnen Arbeitsstationen 1a - 1i, die zusammen mit ihren Hauptförderern 9 jeweils eine konstruktive Einheit bilden, sind über Hilfs- bzw. Zwischenförderer miteinander verbunden, und zwar teilweise über die geradlinigen Zwischenförderer 10 und teilweise über viertelkreisbogenförmige, d.h. kurvengängige Zwischenförderer 11, wobei die in Förderrichtung B aneinander anschließenden Hauptförderer 9 und Zwischenförderer 10 bzw. 11 das Transportsystem der Montageanlage bilden. Ebenso wie die Hauptförderer 9 der einzelnen Arbeitsstationen 1a- 1i besitzen auch die Zwischenförderer 10 und 11 jeweils ein eigenes Antriebssystem, so daß auch die Zwischenförderer 10 und 11 jeweils für sich voll funktionsfähige Konstruktionselemente bilden und somit die Montageanlage in an sich beliebiger Form und Größe durch eine entsprechende Anzahl von Arbeitsstationen 1a - 1i mit zugehörigen Hauptförderern 9 und durch eine entsprechende Anzahl von Zwischenförderern 10 bzw. 11 dem jeweiligen Anwendungszweck entsprechend baukastenartig zusammengebaut bzw. -gesetzt werden kann.

Bei der in der Fig. 1 wiedergegebenen Ausführung ist zwischen den Arbeitsstationen 1a und 1e, aber auch zwischen den Arbeitsstationen 1f - 1h jeweils ein Zwischenförderer 10 vorgesehen. Die Arbeitsstationen 1e und 1f schließen über zwei Zwischenförderer 11 und mehrere Zwischenförderer 10 und die Arbeitsstationen 1h und 1i bzw. 1i und 1a über jeweils einen Zwischenförderer 11 und mehrere Zwischenförderer 10 aneinander an. Die einzelnen Arbeitsstationen 1a - 1i sind weiterhin insbesondere auch so ausgebildet, daß die diesen Arbeitsstationen unmittelbar vorausgehenden oder nachfolgenden Zwischenförderer 10 bzw. 11 an der jeweiligen Arbeitsstation 1a -1i bzw. an deren Vorrichtungsgestell befestigt werden können, und zwar an dort vorgesehenen mechanischen Befestigungs- oder Kupplungseinrichtungen. Dort, wo Zwischenförderer 10 bzw. 11 unmittelbar aneinander anschließen, ist eine mit derartigen Befestigungs- oder Kupplungseinrichtungen versehene Aufständerung vorgesehen, wie dies in der Fig. 1 bei 12 angedeutet ist.

Wie oben bereits erwähnt wurde, weist jeder Hauptförderer 9, aber auch jeder Zwischenförderer 10 bzw. 11 ein eigenes Antriebssystem mit Steuereinrichtung auf. In der Fig. 2 ist dieses Antriebssystem der Hauptförderer 9 mit 13 und das Antriebssystem mit Steuereinrichtung der Zwischenförderer 10 bzw. 11 mit 14 bezeichnet. Über Mehrfach-Verbindungsleitungen bzw. -Kabel 15 und entsprechende aus Mehrfach-Buchsen und -Steckern bestehende Steckverbindungen ist jeder Hauptförderer 9 bzw. Zwischenförderer 10 oder 11 mit dem nachfolgenden Zwischenförderer 10 bzw. 11 oder Hauptförderer 9 verbunden. Über diese mehradrigen Verbindungsleitungen bzw. -Kabel 15 sind bei zusammengebauter Montageanlage nicht nur sämtliche Antriebssysteme 13 und 14 aller Hauptförderer 9 und Zwischenförderer 10 bzw. 11 hinsichtlich ihrer Strom- oder Spannungsversorgung miteinander verbunden, so daß nur ein einziger Anschluß an eine Versorgungsspannung für die Gesamtanlage benötigt wird, sondern über die Verbindungskabel 15 bzw. über dort vorhandene Steueradern sind sämtliche Hauptförderer 9 und Zwischenförderer 10 und 11 bzw. deren Antriebssysteme 13 und 14 auch steuerungsmäßig miteinander sowie ggf. auch mit einer die Montageanlage steuernden zentralen Steuereinrichtung (z.B. mit Rechner) verbunden. Durch die beschriebene Verbindung der Hauptförderer 9 und Zwischenförderer 10 bzw. 11 über die Verbindungskabel 15 ist beim baukastenartigen Zusammensetzen der jeweiligen Montageanlage auch kein erhöhter Verdrahtungsaufwand notwendig. Vorzugsweise sind die den Antriebssystemen 13 und 14 zugeordneten Steuereinrichtungen so ausgebildet, daß diese Antriebssysteme nicht nur unterschiedliche Transportgeschwindigkeiten für den jeweiligen Hauptförderer 9 bzw. Zwischenförderer 10 oder 11 ermöglichen, wobei diese Fördergeschwindigkeiten kontinuierlich oder in vorgegebenen Stufen regelbar sind, sondern die Antriebssysteme 13 und 14 und die zugeordneten Steuereinrichtungen sind auch so ausgebildet, daß bei einer evtl. Störung, bei einem eine längere Zeit benötigenden Arbeitsgang oder bei verminderter Arbeitsgeschwindigkeit an einer Arbeitsstation (nachfolgend allgemein als "Stillstand oder Stau" bezeichnet) die Fördergeschwindigkeiten der in Förderrichtung B vorausgehenden Zwischenförderer 10 bzw. 11 und Hauptförderer 9 schrittweise und zeitverzögernd reduziert werden, und zwar abhängig von einem z.B. von einem Taktsignal gelieferten Zeittakt, der jeweils nach einer vorgegebenen Zeitperiode (Takt) immer dann eine weitere, schrittweise und zeitverzögerte Reduzierung der Fördergeschwindigkeiten der der betreffenden Arbeitsstation in Förderrichtung vorausgehenden Zwischenförderer 10 bzw. 11 und Hauptförderer 9 bewirkt, solange der Stillstand oder Stau an der einen Arbeitsstation besteht. Die stufenförmige und um den Takt des Taktsignals verzögert weitergegebene Reduzierung der Fördergeschwindigkeit erfolgt dabei so, daß nach jedem Takt die Fördergeschwindigkeit eines Hauptförderers 9 oder Zwischenförderers 10 bzw. 11 gleich derjenigen Fördergeschwindigkeit ist, die der in Förderrichtung B folgende und in seiner Fördergeschwindigkeit bereits wenigstens einmal reduzierte Zwischenförderer 10 bzw. 11 oder Hauptförderer 9 vor diesem Takt aufwies. Tritt beispielsweise in der Arbeitsstation 1h ein Stillstand oder Stau auf, bei dem eine dort vorhandene Aufnahme 3 nicht in dem von dem Taktsignal vorgegebenen Takt weiterbewegt wird, so wird am Ende dieses Taktes zunächst die Fördergeschwindigkeit des der Arbeitsstation 1h vorausgehenden Zwischenförderers 10 um eine erste Stufe reduziert. Der Hauptförderer 9 der Arbeitsstation 1g behält zunächst noch seine ursprüngliche, für sämtliche Hauptförderer 9 und Zwischenförderer 10 und 11 jeweils gleiche Fördergeschwindigkeit bei. Hat sich die Aufnahme 3 an der Arbeitsstation 1h auch nach dem nächsten Takt nicht weiterbewegt, so erfolgt eine Reduzierung der Fördergeschwindigkeit des dieser Arbeitsstationen vorausgehenden Zwischenförderers 10 um einen weiteren Schritt, womit dann auch die Fördergeschwindigkeit des Hauptförderers 9 der Arbeitsstation 1g um den ersten Schritt reduziert wird, d.h. die Fördergeschwindigkeit des Hauptförderers 9 der Arbeitsstation 1g entspricht dann derjenigen Fördergeschwindigkeit, die der zwischen den Arbeitsstationen 1g und 1h liegende Zwischenförderer 10 vor dieser zweiten Reduzierung seiner Fördergeschwindigkeit aufwies.

Sind der Stillstand oder Stau an der Arbeitsstation 1h auch nach einem dritten Takt des Taktsignales nicht behoben, so wird die Fördergeschwindigkeit des dieser Arbeitsstation vorausgehenden Zwischenförderers 10 um einen weiteren, dritten Schritt reduziert, was dann zu einer Reduzierung der Fördergeschwindigkeit des Hauptförderers 9 der Arbeitsstation 1g um den zweiten Schritt und letzteres zu einer Reduzierung der Fördergeschwindigkeit des der Arbeitsstation 1g vorausgehenden Zwischenförderers 10 um den ersten Schritt führt. Auf diese Weise werden dann auch bei länger anhaltendem Stillstand oder Stau an der Arbeitsstation 1h die Fördergeschwindigkeiten der in Förderrichtung vorausgehenden Zwischenförderer 10 und 11 bzw. Hauptförderer 9 bei jedem Takt des Taktsignales zeitverzögert bzw. zeitversetzt reduziert. Hiermit wird erreicht, daß bei einem Stillstand oder Stau in einer Arbeitsstation die Aufnahmen 3 sich dieser gestörten Arbeitsstationen mit ständig abnehmender Geschwindigkeit annähern, bis die Aufnahmen 3 dann schließlich vor der gestörten Arbeitsstation stoppen und sich so entgegen der Transportrichtung B ein Aufnahmenstau aufbaut, während an dem von der gestörten Arbeitsstation in Förderrich tung wegführenden oder im großen Abstand von der gestörten Arbeitsstation liegenden Bereich des Transportsystems sich die Aufnahmen 3 noch mit relativ hoher Geschwindigkeit bewegen und dort in der üblichen Arbeitszeit bzw. im üblichen Arbeitstakt die notwendigen Arbeitsgänge durchgeführt werden können. Nach dem Wegfall des Stillstandes oder Staus beispielsweise an der Arbeitsstation 1h werden dann in umgekehrter Weise die Fördergeschwindigkeiten der dieser Arbeitsstation in Förderrichtung B vorausgehenden Zwischenförderer 10 und 11 bzw. Hauptförderer 9 stufenweise und zeitversetzt wieder erhöht.

Die Ausbildung jedes Hauptförderers 9 ergibt sich insbesondere aus den Fig. 3, 4 und 6. Jeder Hauptförderer 9 besteht aus einer mit seinen Oberflächenseiten in vertikalen Ebenen liegenden rechteckförmigen Platine 16, die mit ihren Längsseiten 17 in Förderrichtung B angeordnet ist. An der Oberseite 16′ sind mehrere, jeweils als Riemenscheiben ausgebildete Rollen 18 und 19 um jeweils eine senkrecht zu der Oberseite 16′ verlaufende Achse drehbar gelagert. Die Rollen 18 und 19 sind entlang der Längsseiten 17 der Platine 16 in zwei Gruppen derart angeordnet, daß sich die Rollen 18 an der einen Längsseite 17 auf einer parallel zu dieser Längsseite verlaufenden Linie befinden und die Rollen 19 in gleicher Weise an der anderen Längsseite 17 vorgesehen sind, wobei senkrecht zu diesen Längsseiten 17, d.h. senkrecht zur Förderrichtung B jeder Rolle 18 eine Rolle 19 gegenüberliegt. Die in ihrer Form und Größe jeweils gleich ausgebildeten Rollen 18 und 19 sind doppelkegelstumpfförmig ausgeführt, d.h. sie besitzen eine an die V-Form der Nuten 6 angepaßte Umfangsfläche mit zwei Kegelflächen 20 und 21, zwischen denen eine die Drehachse 22 der betreffenden Rolle 18 bzw. 19 konzentrisch umschließende Umfangsnut 23 vorgesehen ist. Über die Rollen 18 bzw. deren Umfangsnuten 23 ist ein in sich geschlossenes bzw. endloses band- oder riemenartiges Element 24 derart geführt, daß dieses Element 24 an den beiden äußersten, d.h. im Bereich der Querseiten 17' liegenden Rollen 18 um 180° umgelenkt ist und sich an den übrigen Rollen 18 im Bereich deren Umfangsnuten 23 lediglich abstützt. Ein entsprechendes, in sich geschlossenes bzw. endloses riemen- oder bandartiges Element 25 ist in gleicher Weise über die Rolle 19 bzw. deren Umfangsnuten 23 geführt. Die Elemente 24 und 25, die jeweils einen runden Querschnitt aufweisen (Fig. 4) sind aus einem elastischen Material (z.B. Gummi, gummiartigem Material, elastischem Kunststoff) gefertigt. Die Rollen 18 und 19 sind an der Platine 16 weiterhin so angeordnet, daß bei einer am Hauptförderer 9 vorgesehenen Aufnahme 3 die Rollen 18 und 19 mit ihrer Umfangsfläche jeweils seitlich in die Nuten 6 dieser Aufnahme hineinreichen und sich auch die einander zugewendeten inneren Längen der Elemente 24 und 25 innerhalb der Nuten befinden. Die Ausbildung ist dabei weiterhin so getroffen, daß die Rollen 18 mit ihrer Umfangsfläche unmittelbar gegen die auf der einen Längsseite 5 (in der Fig. 4 linke Längsseite) gebildete Nut 6 anliegen, während auf der anderen Längsseite (in der Fig. 4 rechte Längsseite) zwischen dem Boden der dortigen Nut 6 und der Umfangsfläche der in diese Nut hineinreichenden Rollen 19 ein Spalt, allerdings äußerst geringer Dicke besteht und hier hauptsächlich das dortige Element 25 gegen den Boden der Nut 6 anliegt, wobei gleichzeitig auch das Element 24 unter elastischer Verformung seines Querschnittes gegen die Aufnahme 3 im Bereich der in der Fig. 4 rechten Nut 6 gegen die Aufnahme 3 angepreßt anliegt. Hiermit wird eine auch in Richtung senkrecht zur Förderrichtung B genau vorgegebene Positionierung jeder Aufnahme 3 (durch Anlage gegen die Rollen 18) erreicht, was insbesondere dadurch möglich ist, daß das Element 25 einen etwas größeren Querschnitt aufweist als das Element 24.

Wie die Fig. 3 zeigt, sind in der Mitte des Hauptförderers 9 die Rollen 18 bzw. 19 in dichter Folge angeordnet, während diese Rollen an den beiden Enden des Hauptförderers 9 einen größeren Abstand voneinander aufweisen. Hierdurch wird insbesondere in der Mitte jedes Hauptförderers 9, also dort, wo die betreffende Aufnahme für den jeweiligen Arbeitsschritt angehalten wird, eine besonders genaue Positionierung der Aufnahme 3 möglich.

Die beiden Elemente 24 und 25 sind gegensinnig in der Weise antreibbar, da die einander benachbarten inneren Längen dieser Elemente sich jeweils in gleicher Richtung und mit gleicher Geschwindigkeit bewegen, und zwar entweder in Förderrichtung B insbesondere auch zum Zuführen und Abführen einer Aufnahme 3 aber auch bei einer evtl. Bewegung der Aufnahme während eines Arbeitsganges, wobei innerhalb eines Arbeitsganges oder Arbeitsprozesses die Elemente 24 und 25 auch so angetrieben werden können, daß sich die betreffende Aufnahme 3 entgegen der eigentlichen Förderrichtung B bewegt. Das Antriebssystem 13 für die Elemente 24 und 25 ist an der Unterseite 16" der Platine 16 vorgesehen. Dieses Antriebssystem besteht im wesentlichen aus einem in seiner Drehrichtung umkehrbaren Schrittmotor 26 und aus einem in sich geschlossenen Antriebsriemen 27, der über eine Antriebsscheibe 28 des Schrittmotors 26, über eine Spannrolle 29 sowie über mehrere Riemenscheiben 30 geführt ist, von denen einige lediglich zur Umlenkung des Antriebsriemens 27 dienen, andere aber auch über jeweils eine Welle 31 antriebsmäßig mit einer Rolle 18 bzw. 19 verbunden sind. Mit Hilfe des Schrittmotors 26 ist es möglich, die betreffende, an einer Arbeitsstation 1a - 1i befindliche Aufnahme 3 in kleinen Schritten in Förderrichtung B bzw. entgegen dieser Förderrichtung zu bewegen, um so entsprechende Montagevorgänge usw. durchführen zu können, d.h. durch diese Bewegung der jeweiligen Aufnahme 3 ist es möglich, eine Bewegung bei dem an der betreffenden Arbeitsstation vorgesehenen Werkzeug usw. einzusparen.

Die Steuerung des Schrittmotors 26 erfolgt im einfachsten Fall durch eine an dem Hauptförderer 9 vorgesehene Lichtschranke 32/33 oder durch einen anderen Sensor üblicher Ausbildung, wobei diese Lichtschranke oder dieser Sensor ein den Schrittmotor 26 abschaltendes Signal immer dann liefert, wenn eine Aufnahme die betreffende Arbeitsstation bzw. die von der Lichtschranke 32/33 oder dem Sensor überwachte Position erreicht hat. Eine Steuerung des Schrittmotors 26 für eine Bewegung der betreffenden Aufnahme 3 in besonders kleinen Schritten ist auch dadurch möglich, daß an einer Fläche der Aufnahmen 3, beispielsweise an der Oberseite 16' oder Unter seite 16" dieser Aufnahmen 3 eine Markierung oder Kodierung 34 vorgesehen ist, die optisch, magnetisch oder auf andere Weise mit einem Sensor 35 abgetastet werden kann, der dann ein der jeweiligen Positionierung der Aufnahme 3 entsprechendes Signal zur Steuerung des Schrittmotors 26 liefert. Bei der dargestellten Ausführungsform ist die Kodierung 34 eine Strich-Kodierung aus mehreren in Längsrichtung der Aufnahme 3 aufeinander folgend angeordneten dunkelfarbigen Balken mit dazwischenliegenden helleren Bereichen. Der Sensor 35 ist dann vorzugsweise ein mit einem Laser-Lichtstrahl arbeitender Sensor. Auch andere Kodierungen und Sensoren können hier verwendet werden. Bevorzugt enthält die Kodierung 34 auch eine die jeweilige Aufnahme 3 identifizierende Information, mit der dann z.B. die zentrale Steuereinrichtung die Positionierung jeder Aufnahme 3 innerhalb der Montageanlage feststellen kann.

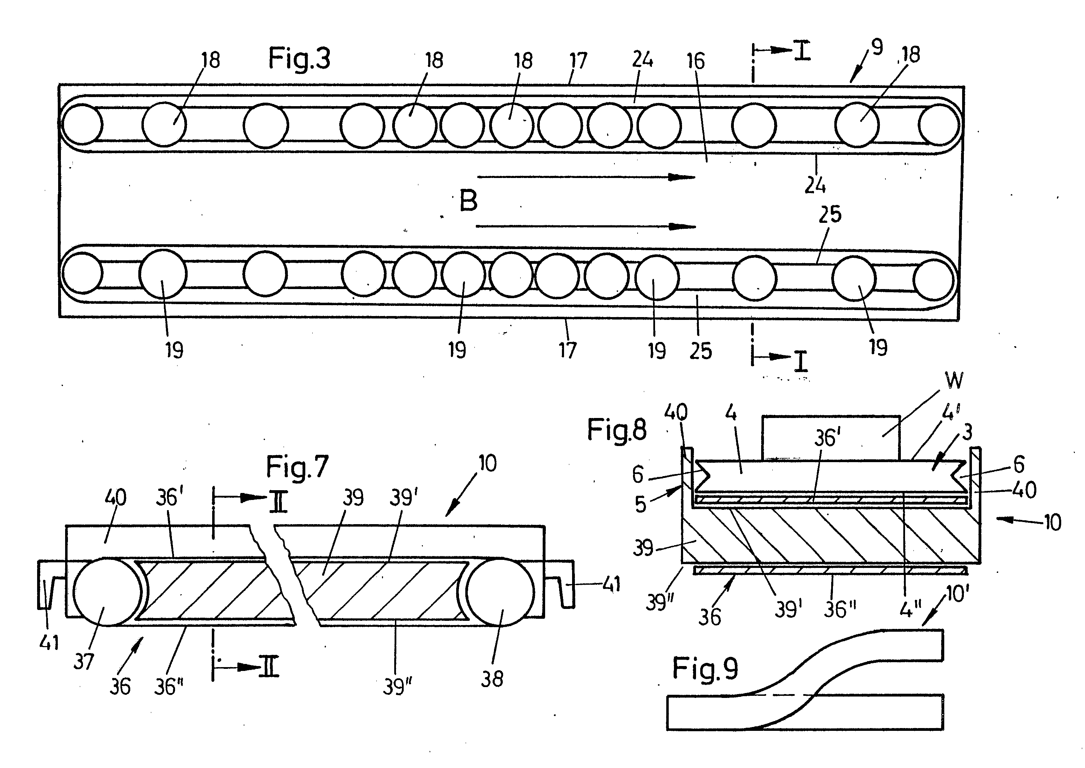

Die Zwischenförderer 10 sind entsprechend den Fig. 7 und 8 im wesentlichen von einem in sich geschlossenen Transportband 36 gebildet, welche an jedem Ende des jeweiligen Zwischenförderers 10 über eine Umlenkrolle oder -walze 37 bzw. 38 geführt ist, von denen beispielsweise die Umlenkwalze 37 durch einen Antrieb des Antriebssystems 14 angetrieben ist. Dieser Antrieb ist ein in seiner Geschwindigkeit regelbarer elektrischer Antriebsmotor. Die obere, horizontale Länge des Transportbandes 36, auf der die Aufnahmen 3 mit ihrer Unterseite 4″ aufliegen, stützt sich ihrerseits mit ihrer Unterseite auf der Oberseite 39′ einer Profilschiene 39 ab, die sich über die gesamte Länge des jeweiligen Hilfsförderers 10 erstreckt und an den beiden, in Förderrichtung B verlaufenden Längsseiten jeweils einen über die Oberseite 39′ vorstehenden stegartigen Rand 40 besitzt, der als seitliche Führung für die Aufnahmen 3 an dem Zwischenförderer 10 dient. Die jeweilige untere Länge 36″ des Transportbandes 36 befindet sich an der Unterseite 39″ der Profilschiene 39, an der auch die beiden Umlenkwalzen 37 und 38 gelagert sind und die weiterhin Kupplungs- oder Verbindungselemente 41 zum Befestigen des jeweiligen Zwischenförderers 10 zwischen zwei Arbeitsstationen 1a - 1i oder an einer Aufständerung 12 aufweist.

In ähnlicher Weise wie die Zwischenförderer 10 sind auch die Zwischenförderer 11 ausgebildet, d.h. diese bestehen ebenfalls aus der hier allerdings gekrümmten Profilschiene 39 mit den Rändern 40, wobei anstelle des Transportbandes 36 ein kurvengängiges Transportelement vorgesehen ist, welches beispielsweise von einer Vielzahl von in Förderrichtung B aufeinander folgenden Förderwalzen 42 gebildet ist, die ähnlich den Umlenkwalzen 37 und 38 in der den jeweiligen Zwischenförderer 11 bildenden Profilschiene drehbar gelagert sind, mit dem jeweils oberen Teil ihrer Umfangsfläche eine Anlagefläche für die Unterseite 4″ der Aufnahmen 3 bilden und durch einen den Antrieb des Antriebssystems 14 bildenden, in seiner Geschwindigkeit regelbaren Antriebsmotor angetrieben sind.

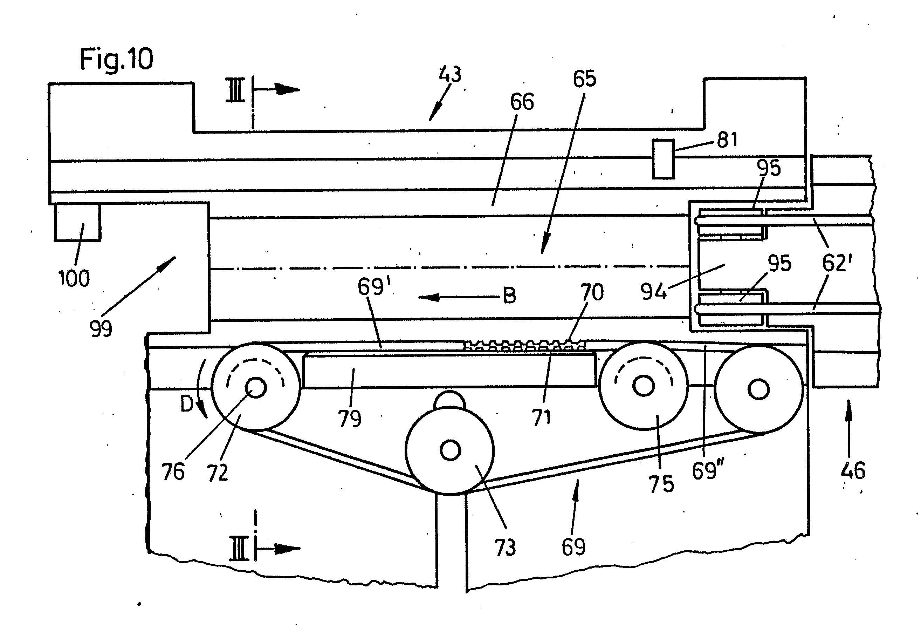

Wie in der Fig. 9 angedeutet ist, können anstelle eines oder mehrerer Zwischenförderer und dabei insbesondere anstelle eines oder mehrerer Zwischenförderer 10 auch Zwischenförderer 10′ verwendet sein, die weichenartig als Abzweigung oder Zusammenführung ausgebildet sind, so daß es dann in der Gesamtmontageanlage beispielsweise auch möglich ist, für einen bestimmten, größere Zeit in Anspruch nehmenden Arbeitsschritt zwei oder mehrere parallel arbeitende Arbeitsstationen vorzusehen oder aber einen Teil der Aufnahmen 3 aus dem üblichen Produktionsablauf vorübergehend auszuschleusen und die auf diesen Aufnahmen 3 vorgesehenen Werkstücke oder Werkstückteile zusätzlichen Arbeitsschritten (Montage- und/oder Prüfschritten usw.) zu unterziehen, die für die auf den übrigen Aufnahmen 3 vorhandenen Werkstücke oder Werkstückteile nicht erwünscht oder erforderlich ist. Speziell für dieses Ausschleusen bestimmter Aufnahmen 3 ist die oben erwähnte, die einzelnen Aufnahmen identifizierende Kodierung von Bedeutung. Der als Abzweigung oder Zusammenführung dienende Zwischenförderer 10′ ist biespielsweise in seinen geradlinig verlaufenden Abschnitten entsprechend dem Zwischenförderer 10 und in seinen kurvengängigen Abschnitten entsprechend dem Zwischenförderer 11 ausgebildet.

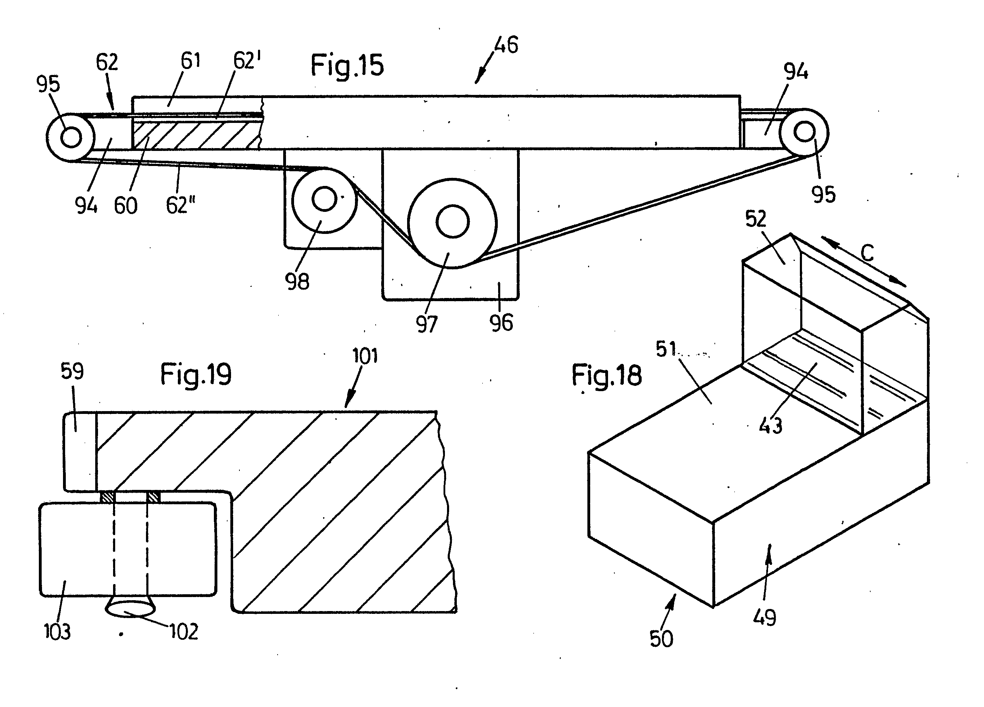

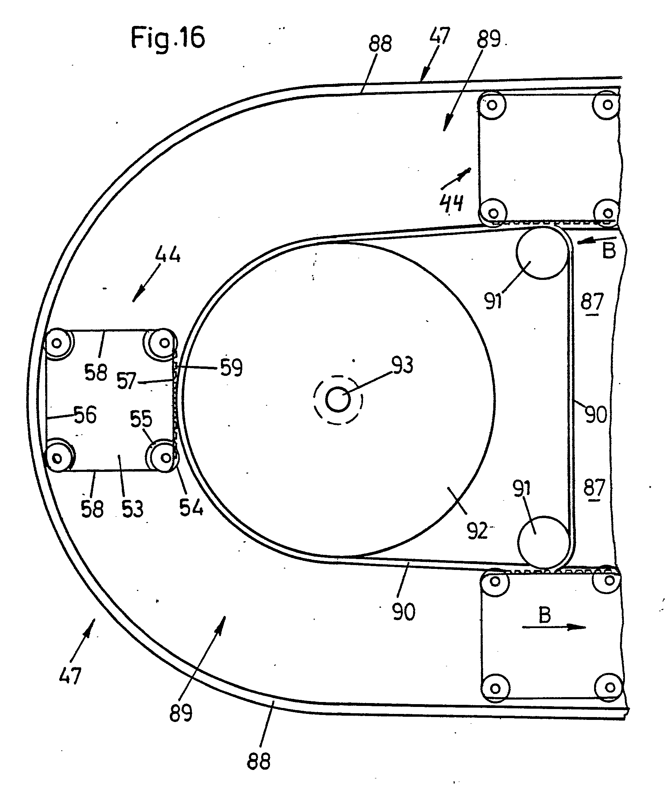

In der Fig. 10 ist als weitere Ausführungsform ein Hauptförderer 43 wiedergegeben, der zusammen mit weiteren, gleichartigen Hauptförderern 43 das Transport- bzw. Transfersystem 48 einer Montageanlage, beispielsweise der Montageanlage gemäß Fig. 17 bildet, und zwar in Verbindung mit den Aufnahmen 44, die von ihrer Funktion her den vorbeschriebenen Aufnahmen 3 entsprechen, ebenfalls mit Werkstückhalterungen bzw. Nester zur Aufnahme von Werkstücken bzw. Werkstückteilen W versehen sind und mit Hilfe des Transfersystems 48 von Arbeitsstation zu Arbeitsstation weiterbewegt werden. In der Fig. 17 sind die Arbeitsstationen mit 45a - 45d bezeichnet, wobei im Bereich jeder Arbeitsstation das Transportsystem 48 wiederum von einem Hauptförderer 43 gebildet ist. Bei der Ausführung nach Fig. 17 werden die Aufnahmen 44 in Richtung des Pfeiles B entlang des Transportsystems 48 bewegt, und zwar auf zwei parallel zueinander verlaufenden, jeweils von den Hauptförderern 43 und den Zwischenförderern 46 gebildeten Teilstrecken bzw. Abschnitten 48′ und 48″, an denen bei der gezeigten Ausführungsform in Förderrichtung B jeweils auf einen Hauptförderer 43 ein Zwischenförderer 46 folgt und die über zwei als Wendebogen ausgebildete Förderstrecken 47 zu einem geschlossenen Kreislauf miteinander verbunden sind. Die Hauptförderer 43 sind dabei jeweils kürzer als die Zwischenförderer 46.

Wie die Fig. 17 auch zeigt, sind die Hauptförderer 43 und die Zwischenförderer 46 an den beiden, über die Förderstrecken 47 miteinander verbundenen geradlinigen Abschnitten 48' und 48" derart versetzt vorgesehen, daß senkrecht zur Transportrichtung B jedem Hauptförderer 43 ein Zwischenförderer 46 gegenüberliegt. Diese Ausbildung hat den Vorteil, daß das gesamte Transportsystem 48 (mit Ausnahme der Förderstrecken 47) sich ausschließlich aus gleichartigen Modulen 49 zusammensetzt, die jeweils aus einem Rahmengesteil 50 bestehen, welches an seiner Oberseite und parallel zu einer dortigen Schmalseite einen Hauptförderer 43 aufweist. Jeder Zwischenförderer 46 ist ein von den Rahmengestellen 50 getrenntes Element mit eigenem Antrieb und/oder Steuerung und ist beidendig an jeweils einem Hauptförderer 43 bzw. an einer Förderstrecke 47 derart eingehängt, daß dieser Zwischenförderer 46 parallel zu einem Hauptförderer 43 liegt und das diesem Hauptförderer 43 zugeordnete Rahmengestell 50 überbrückt. Der Hauptförderer 43 und der Zwischenförderer 46 sind dabei jeweils auf dem gleichen Niveau, d.h. mit gleichem Abstand von der Unterseite bzw. der dortigen Standfläche des Rahmengestells 50 vorgesehen. Bei der dargestellten Ausführungsform sind die Rahmengestelle 50 jeweils so ausgebildet, daß sie in Draufsicht eine rechteckförmige Umfangslinie aufweisen, wobei der Hauptförderer 43 und der Zwischenförderer 46 jeweils im Bereich einer kürzeren Seite dieser Umfangslinie vorgesehen sind. Zwischen dem Hauptförderer 43 und dem Zwischenförderer 46 ist am Rahmengestell 50 jedes Moduls 49 ein genügend großer Freiraum 51 vorhanden, in welchem die Elemente der jeweiligen Arbeitsstation 45a - 45d, beispielsweise die Elemente für die Teile-bzw. Bauelementzufuhr, die Montageelemente oder Aggregate, Meßelemente oder -stationen, usw. montiert werden können. Weiterhin ist es möglich, an jeder Arbeitsstation 45a - 45d, d.h. an dem dortigen Hauptförderer 43 eine Haube 52 vorzugsweise aus transparentem bzw. durchsichtigem Material, d.h. aus transparentem Kunststoff (Acrylglas) vorzusehen, die den Hauptförderer 43 bzw. die übrigen Elemente der jeweiligen Arbeitsstation 45a - 45d zumindest zur Bedienerseite, d.h. zur Außenseite des von dem Transportsystem 48 geschlossenen Kreislaufs hin abdeckt und die verschiebbar derart vorgesehen ist, daß sie im Bedarfsfall, d.h. beispielsweise zum Beheben von Störungen in Förderrichtung B bzw. entgegen dieser Förderrichtung zur Freigabe der betreffenden Arbeitsstation bzw. zum erneuten Abdecken dieser Arbeitsstation verschoben werden kann, wie dies in der Fig. 18 mit dem dortigen Doppelpfeil C angedeutet ist. Da in jedem Abschnitt 48' und 48" des Transportsystems 48 einen Hauptförderer 43 einen Zwischenförderer 46 ohne Haube 52 unmittelbar benachbart ist, ist das vorgenannte Verschieben der Hauben 52 zum Öffnen und Wiederschließen des jeweiligen Arbeitsbereiches möglich.

Die Förderstrecken 47 sind ebenfalls jeweils von einem Modul gebildet, welcher an einem mit dem Rahmengestell 50 vorzugsweise identischen Rahmengestell die Förderstrecke 47 aufweist. Mit zwei jeweils eine Förderstrecke 47 aufweisenden Modulen und einer der Anzahl der benötigten Arbeitsstationen 45a - 45d entsprechenden Anzahl von Modulen 49 kann das Transportsystem 48 für eine Montageanlage zusammengestellt werden, wobei vorzugsweise auch für die Arbeitsstationen 45a - 45d, d.h. für die dortigen Funktionselemente bzw. -einheiten zumindest weitestgehend Elemente bzw. Aggregate verwendet werden, die für den jeweils an einer Arbeitsstation durchzuführenden Arbeitsgang standartisiert sind, so daß sich die Montageanlage in Modul-Bauweise dem jeweiligen Zweck, der jeweiligen Leistung usw. entsprechend preiswert herstellen läßt. Bei entsprechender Ausbildung der Transportstrecken 47 bzw. deren Transportelemente kann auch an wenigstens einer der Transportstrecken 47 eine Arbeitsstation gebildet sein, wie dies in der Fig. 17 bei 45e angedeutet ist.

Die Aufnahmen 44 bestehen jeweils aus einer Platte 53 vorzugsweise aus Metall oder einem anderen geeigneten Material mit einem leicht recheckförmigen Zuschnitt, so daß jede Aufnahme 44 einem flachen Quader entspricht. Im Bereich der Unterseite 44' weist jede Aufnahme 44 an den abgerundeten, senkrecht zu der Unterseite 44' bzw. Oberseite 44" verlaufenden Ecken eine Rolle 54 auf, die um eine parallel zu dieser Ecke und damit senkrecht zur Unterseite 44' bzw. Oberseite 44" verlaufende Achse frei drehbar ist. Jede Rolle 54 ist in einer an der Unterseite 44' vorgesehenen Ausnehmung 55 derart angeordnet, daß diese Rolle 54 lediglich mit einem Teilbereich über die benachbarte längere Umfangsseite 56 bzw. 57 der leicht rechteckförmigen Aufnahme 44 wegsteht, nicht jedoch über die benachbarte kürzere Umfangsseite 58. Im Transportsystem 48 sind die Aufnahmen 44 mit ihren Umfangsseiten 56 und 57 jeweils in Transportrichtung B angeordnet. An der Umfangsseite 57 ist jede Aufnahme 44 mit einer Verzahnung 59 versehen, die von einer Vielzahl von in Richtung der Umfangsseite 57, d.h. in Förderrichtung B aufeinanderfolgenden Zähnen besteht, die sich von der Oberseite 44" der betreffenden Aufnahme 44 bis etwa über die halbe Höhe dieser Aufnahme erstrecken, d.h. auf einem Niveau zwischen der Unterseite 44' und der Oberseite 44' enden, welches (Niveau) etwas oberhalb der Rollen 54 liegt. Vorzugsweise ist jede Aufnahme 44 an beiden Umfangsseiten 56 und 57 mit der Verzahnung 59 versehen.

Jeder Zwischenförderer 46 ist ähnlich dem Zwischenförderer 10 ausgebildet, d.h. der Zwischenförderer 46 besteht jeweils aus einer Platte bzw. Platine 60, an deren Oberseite 60′ zwei über diese Oberseite wegstehende Führungsleisten 61 vorgesehen sind, die jeweils in Förderrichtung B verlaufend parallel und in einem solchen Abstand zueinander vorgesehen sind, daß zwischen den beiden Führungsleisten 61 ein nach oben hin offener Kanal 63 gebildet ist, in welchen die Aufnahmen 44 mit ihren über die Umfangsseiten 56 und 57 wegstehenden Rollen 54 passen. Anstelle des Förderbandes 36 sind bei dem Zwischenförderer 46 zwei jeweils eine geschlossene Schlaufe bildende, endlos umlaufend angetriebene, bandartige Elemente bzw. Riemen 62 vorgesehen, deren obere Längen 62′ sich über der Oberseite 60′ der Platte 60 befinden und Auflagen für die Unterseite 44′ der Aufnahmen 44 bilden, so daß letztere mit den umlaufenden Förderriemen 62 entlang des jeweiligen Zwischenförderers 46 bewegt werden. Die Platte 60, die einen rechteckförmigen Zuschnitt aufweist, bildet an ihren beiden Enden dort über die Führungsleisten 61 wegstehende Vorsprünge 94, an denen auch Rollen 95 zum Umlenken der Riemen 62 vorgesehen sind und mit denen jeder Zwischenförderer 46 an benachbarten Förderern 43 bzw. 47 eingehängt wird. An der Unterseite der Platte 64 ist ein Antriebsmotor 96 mit zwei Riemenrädern 97 vorgesehen, über die die Riemen 62 geführt sind. Weiterhin ist für jeden Riemen 62 noch eine Umlenkrolle 98 an der Unterseite der Platte 60 vorgesehen.

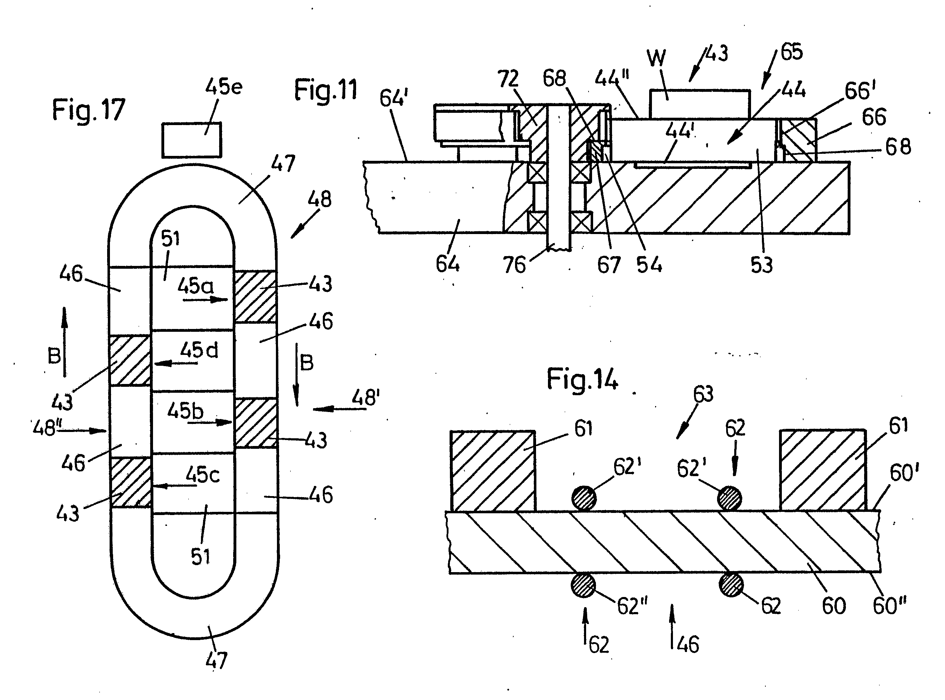

Der Hauptförderer 43 ist ebenfalls von einer Platte bzw. Platine 64 gebildet, die an ihrer Oberseite 64′ mit einem dem Führungskanal 63 entsprechenden Führungskanal 65 versehen ist. Wie insbes. die Fig. 11 zeigt, ist der Führungskanal 65 dadurch gebildet, daß an der Oberseite 64′ der Platine 64 eine über diese Oberseite wegstehende Führungsleiste 66 und dieser gegenüberliegend eine Führungsleiste 67 vorgesehen sind, wobei an den Führungsleisten 66 und 67 an den einander zugewendeten Seiten dieser Führungsleisten jeweils eine sich über die gesamte Länge des Hauptförderers 43 erstreckende nutenförmige Ausnehmung 68 vorgesehen ist, in die bei einer im Hauptförderer 43 positionierten Aufnahme 44 die Rollen 54 dieser Aufnahme 44 derart eingreifen, daß die Aufnahme 44 zwar in Förderrichtung B oder auch entgegen dieser Förderrichtung B bewegbar ist, aus dem Hauptförderer 43 bzw. aus dem Führungskanal 65 nach oben jedoch nicht herausgenommen werden kann. Weiterhin sind die Ausnehmungen 68 so ausgebildet, daß die jeweilige Aufnahme 44 mit ihrer Unterseite 44′ auf dem zwischen den Führungsleisten 67 und 68 gebildeten Boden des Führungskanales 65 aufliegt. Wie die Fig. 11 auch zeigt, besitzt die Führungsleiste 66 in Richtung senkrecht zur Oberseite 64′ der Platte 64 eine wesentlich größere Höhe als die Führungsleiste 67, d.h. die Höhe der Führungsleiste 66 ist in etwa gleich der Dicke der die Aufnahmen 44 bildenden Platten, während die Führungsleiste 67 eine solche Höhe aufweist, daß die Oberseite dieser Führungsleiste nur bis etwa in dem Bereich des unteren Endes der die Verzahnung 59 bildenden Zähne reicht.

An der von der Führungsleiste 67 gebildeten Seite des Führungskanales 65 ist ein in sich geschlossener, endlos umlaufender Zahnriemen 69 vorgesehen, der als doppelseitiger Zahnriemen ausgebildet ist, d.h. der Zahnriemen 69 weist sowohl an der Außenseite als auch der Innenseite der von ihm gebildeten Schlaufe Zähne 70 bzw. 71 auf. Der Zahnriemen 69 ist bei der dargestellten Ausführungsform über insgesamt vier Zahnriemenräder 72 - 75 geführt, die jeweils um eine senkrecht zur Oberseite 64′ verlaufende Achse drehbar an der Platte 64 vorgesehen sind. Bei der dargestellten Ausführungsform ist das Zahnriemenrad 72 auf einer Welle 76 vorgesehen, die durch einen Schrittmotor 77 angetrieben wird und mit der als Sensor auch ein Drehweggeber 78 verbunden ist. Die übrigen Zahnriemenräder 73 - 75 sind frei drehbar an der Platte 64 gelagert, wobei das Zahnriemenrad 73 zum Spannen und die Zahnriemenräder 74 und 75 zum Umlenken des Zahnriemens 69 dienen. Zwischen den in der normalen Transportrichtung B aufeinanderfolgenden Zahnriemenrädern 75 und 72 bildet der Zahnriemen 69 eine oberhalb der Führungsleiste 67 sich erstreckende, parallel und im Abstand von der Führungsleiste 66 verlaufenden Länge 69′, deren Abstand von der Führungsleiste 66 der Breite des Führungskanales 65 entspricht. Die Zahnriemenräder 75 und 72 sind so angeordnet, daß in der normalen Transportrichtung B, in der sich auch die Länge 69′ bewegt, das Zahnriemenrad 72 auf das Zahnriemenrad 75 folgt, d.h. also der Zahnriemen 69 im Bereich der Länge 69′ von dem Zahnriemenrad 72 gezogen wird. Über der Führungsleiste 67 ist zwischen den Zahnriemenrädern 75 und 72 noch eine Abstützleiste 79 vorgesehen, gegen die der Führungsleiste 66 abgewandte und mit den Zähnen 71 versehene Seite der Länge 69′ des Zahnriemens 69 anliegt und die zumindest im Bereich dieser Anlagefläche von einem gleitfähigen Material, beispielsweise von gleitfähigerem Kunststoff gebildet ist. Durch die Eigenelastizität des Zahnriemens 69 und/oder durch federnde Ausbildung der Abstützleiste 79 ist weiterhin dafür gesorgt, daß die in einem Hauptförderer 43 befindliche Aufnahme 44 durch den Zahnriemen 69 bzw. dessen Länge 69′, die mit ihren Zähnen 70 in Eingriff mit der Verzahnung 59 der Aufnahme 44 steht, gegen die Führungsleiste 66 angedrückt wird, so daß insoweit in der horizontalen Achsrichtung senkrecht zur Förderrichtung B eine exakte Positionierung der jeweiligen Aufnahme 44 im Hauptförderer 43 bzw. im Führungskanal 65 gewährleistet ist.

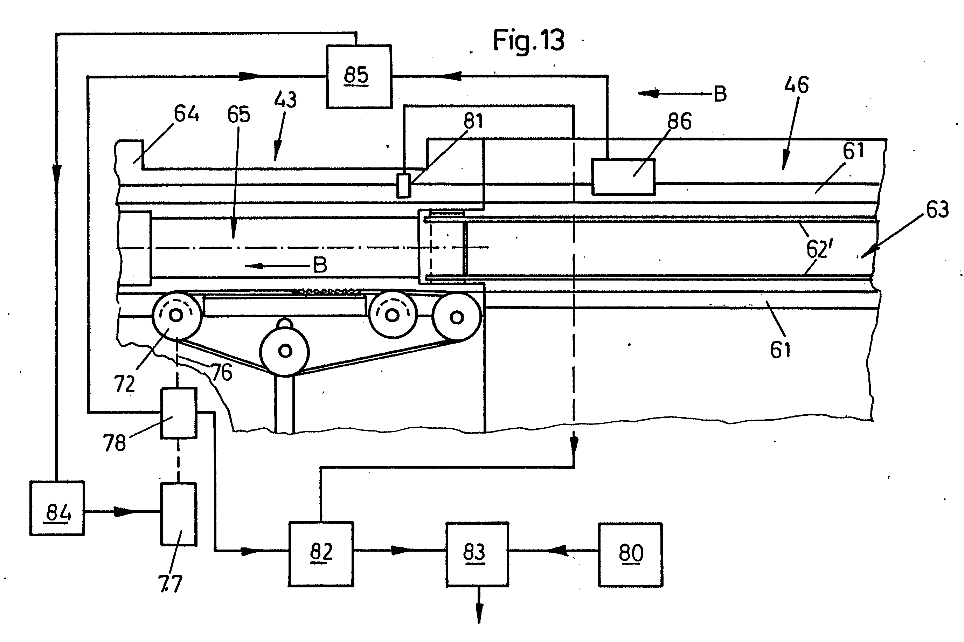

Mit Hilfe des Schrittmotors 77 kann unter Berücksichtigung des von dem Drehweggeber 78 gelieferten Signal in Transportrichtung B oder ggfs. entgegen dieser Transportrichtung eine gewünschte Position für die jeweilige Aufnahme 44 im Bereich des Hauptförderers 43 sehr exakt angefahren werden. Die Steuerung hierfür erfolgt beispielsweise entsprechend Fig. 13 in der Weise, daß die entsprechende Position, an der die jeweilige Aufnahme 44 im Führungskanal 65 des Hauptförderers 43 gestoppt werden soll, durch einen in einer Speichereinrichtung 80 gespeicherten Wert definiert ist. Durch einen am Einlauf bzw. Eingang des Hauptförderers 43 vorgesehenen Sensor 81 wird an eine Zählereinrichtung 82 ein Signal dann geliefert, wenn eine Aufnahme 44 diesen Einlauf erreicht hat. Der Sensor 81, mit dem das Vorhandensein einer Aufnahme 44 grob festgestellt wird, ist so positioniert, daß er eine ankommende Aufnahme 44 erst dann feststellt und ein entsprechendes Signal erst dann an die Zählereinrichtung 82 liefert, wenn die Verzahnung 59 der betreffenden Aufnahme 44 bereits eindeutig in Eingriff mit den Zähnen 70 des Zahnriemens 69 steht.

Sobald der Zähleinrichtung 82 das von dem Sensor 81 gelieferte Signal sowie ein weiteres einer vorgegeben Null-Stellung der Auffnahme 44 entsprechendes Signal vorliegen, beginnt diese Zähleinrichtung 82 die von dem Drehweggeber 58 gelieferten Impulse zu zählen. Der Ausgang der Zähleinrichtung 82 wird in einer Vergleichsschaltung 83 mit dem Ausgang des Speichers 80 verglichen. Ist der Ausgang der Zählereinrichtung 82 gleich dem im Speicher 80 gespeicherten Wert, liefert die Vergleichseinrichtung 83 ein Signal zum Abschalten des Schrittmotors 77. Das vorgenannte, der Null-Stellung entsprechende Signal wird beispielsweise ebenfalls vom Sensor 78 geliefert, und zwar dann, wenn sich die Welle 76 und damit auch der Zahnriemen 69 nach dem Vorliegen des Signals des Sensors 81 in einer bestimmten, vorgegebenen, der Null-Stellung entsprechenden Position befinden.

Selbstverständlich sind auch andere Arten der Steuerung des Schrittmotors 77 unter Berücksichtigung des vom Drehweggeber 78 gelieferten Signals möglich. Insbesondere ist es auch möglich, die Steuerung des Schrittmotors 77 so vorzunehmen, daß kurz vor Erreichen der Sollposition der jeweiligen Aufnahme 44 die Drehgeschwindigkeit des Schrittmotors 77, d.h. die Anzahl der je Zeiteinheit erfolgenden Drehschritte verringert werden, un so insbes. übermäßig hohe Beschleunigungskräfte beim Stillsetzen der Aufnahme 44 in der Sollposition zu vermeiden.

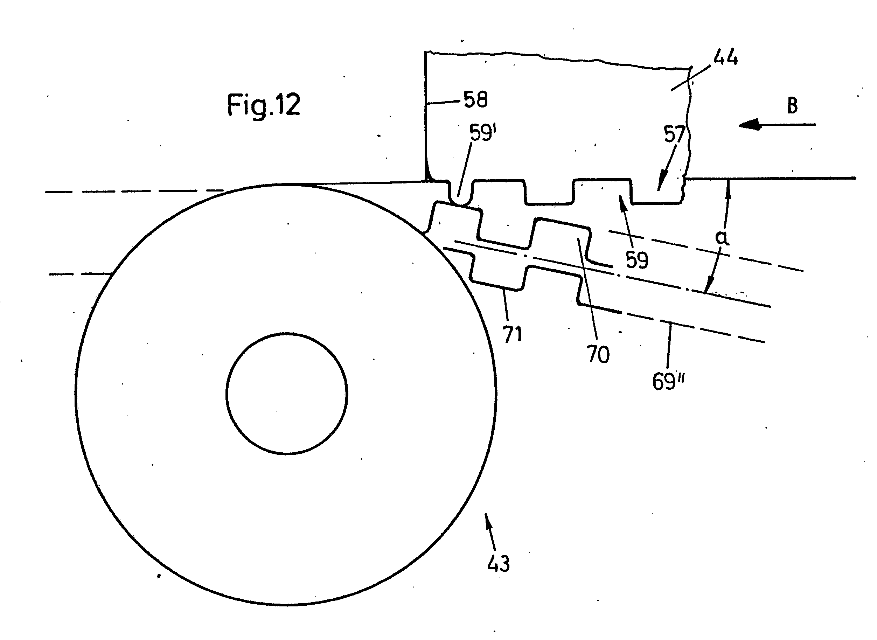

Um sicherzustellen, daß die Aufnahmen 44, die jeweils mit relativ hoher Geschwindigkeit von Arbeitsstation zu Arbeitsstation weiterbewegt werden, am Einlauf des auf eine Arbeitsstation bzw. auf einen Zwischenförderer 46 folgenden Hauptförderer 43 jeweils ordnungsgemäß mit der Verzahnung 59 in die Zähne 70 des Zahnriemens 69 in Eingriff kommen, ist der Zahnriemen 69 jedes Hauptförderers 43 am Einlauf über die dortigen Zahnriemenräder 74 und 75 derart geführt, daß zwischen diesen Zahnriemenrädern der Zahnriemen 69 eine Länge 69″ von beispielsweise 4 - 5 cm bildet, die (Länge) entsprechend der Fig. 12 einen spitzen Winkel a mit der Förderrichtung B einschließt, und zwar in der Form, daß in Förderrichtung B, d.h. in Bewegungsrichtung der Längen 69′ und 69″ sich der Zahnriemen 69 auf der der Länge 69′ vorausgehenden Länge 69″ dem Bewegungsraum der Verzahnung 59 der Aufnahmen 44 annähert. In der Fig. 12 ist der Winkel a übertrieben groß dargestellt. Tatsächlich beträgt dieser Winkel a nur wenige Grade. Wie die Fig. 12 weiterhin zeigt, ist der in Transportrichtung B vordere, d.h. an der Vorderseite der jeweiligen Aufnahme (44) vorgesehene Zahn 59′ der Verzahnung 59 abgerundet und auch schmäler ausgebildet als die übrigen Zähne der Verzahnung 59. Hierdurch und durch die elastische Ausbildung des Zahnriemens 69, d.h. durch das nachgiebige Ausweichen dieses Zahnriemens senkrecht zur Laufrichtung der Länge 69″ ist in Verbindung mit dem Winkel a zwischen der Länge 69″ und der Transportrichtung B erreicht, daß selbst dann, wenn im ungünstigsten Fall der vorderste Zahn 59′ der Verzahnung 59 auf einen Zahn 70 des Zahnriemens 69 trifft, wie dies in der Fig. 12 dargestellt ist, sich der Zahnriemen 69 an dem Zahn 59′ vorbeibewegen kann, bis der Zahn 59′ an seiner (bezogen auf die Transportrichtung B) hinteren Flanke von der vorderen Flanke des nächstfolgenden Zahns 70 des Zahnriemens 69 erfaßt wird und damit dann auch die Verzahnung 59 insgesamt in Eingriff mit den Zähnen 70 kommt.

Da der einem Hauptförderer 43 vorausgehende oder sich an einen Hauptförderer anschließende Zwischenförderer 46 mit seinem Vorsprung 94 in eine entsprechende Ausnehmung 99 am Einlauf bzw. Auslauf des Hauptförderers eingreift und dort mit der Unterseite 60″ seiner Platte 60 auf Vorsprüngen 100 aufliegt, ist auch erreicht, daß die Förderriemen 62 des Zwischenförderer 46 bis an den Einlauf bzw. Auslauf des nachfolgenden bzw. vorausgehenden Hauptförderers 43 reichen, und zwar derart, daß die oberen Längen 62′ der Transportriemen 62 dort enden, d.h die Umlenkrollen 95 dort vorgesehen sind, wo die jeweilige Aufnahme 44 mit ihrer Verzahnung 59 bereits in Eingriff mit den Zähnen 70 des Zahnriemens 69 des nachfolgenden Hauptförderers 43 ist. Wie in der Fig. 10 angedeutet ist, überlappen die oberen Längen 62′ den Zahnriemen 69 im Bereich seiner Länge 69". Grundsätzlich kann die schräg zur Förderrichtung B verlaufende Länge 69" auch am Auslauf jedes Hauptförderers 43 vorgesehen werden, so daß die Hauptförderer 43 für eine Förderrichtung in Richtung des Pfeiles B sowie für einer Förderrichtung entgegen des Pfeiles B verwendet werden können. In diesem Fall ist dann am Auslauf zusätzlich zu dem Zahnriemenrad 72 ein dem Zahnriemenrad 74 entsprechendes Rad vorgesehen, welches vorzugsweise letzteres durch den Motor 77 angetrieben ist. Außerdem weist dann jede Aufnahme 44 an beiden Enden wenigstens einen Zahn 59' auf.

Das In-Eingriffkommen zwischen der Verzahnung 59 einer Aufnahme 44 und den Zähnen 70 des Zahnriemens 69 eines Hauptförderers kann auch elektrisch bzw. elektronisch unterstützt werden. Hierfür ist es beispielsweise möglich, die den Schrittmotor 77 ansteuernde Einrichtung 84, die beispielsweise ein Impulsgenerator ist, so auszubilden, daß diese Einrichtung 84 dann, wenn die in der Fig. 12 dargestellte Situation eintritt, d.h. der erste Zahn 59' einer Aufnahme 44 an einem Zahn 70 des Zahnriemens 69 zur Anlage kommt und dadurch das von dem Schrittmotor 77 angegebene Drehmoment einen vorgegebenen Wert übersteigt, den Schrittmotor 77 kurzzeitig für eine Bewegung entgegen der normalen Drehrichtung, d.h. entgegen dem Pfeil D angetrieben wird, und zwar vorzugsweise um einen Winkelbetrag, der der etwa der halben Teilung der von den Zähnen 70 gebildeten Verzahnung entspricht, worauf der Schrittmotor 77 dann wieder in der normalen Drehrichtung D weiterläuft. Durch diese kurzzeitige Umkehr der Drehrichtung des Schrittmotors 77 und damit des Zahnriemens 69 kommt bei der in der Fig. 12 dargestellten Situation der gegen die Oberseite des Zahnes 59' anliegende Zahn 70 frei und in der erforderlichen Weise mit seiner vorderen Flanke gegen die hintere Flanke des Zahnes 59' zur Anlage. Das Drehmoment des Schrittmotors 77, welches (Drehmoment) das kurzzeitige Umschalten der Drehrichtung auslöst, wird beispielsweise im Generator 84 durch Messen des dem Schrittmotor 77 zufließenden Stromes bestimmt. Das Drehmoment kann aber auch auf andere Weise gemessen bzw. bestimmt werden.

Grundsätzlich ist es auch möglich, durch einen elektronischen Regelkreis die Frequenz des Generators 84 und damit die Drehzahl des Schrittmotors 77 so zu regeln, daß immer dann, wenn eine Aufnahme 44 sich in den Einlauf eines Hauptförderers 43 hineinbewegt, der Zahnriemen 69 die gleiche Geschwindigkeit wie diese Aufnahmen 44 aufweist und auch die Zähne 70 so positioniert sind, daß am Einlauf, d.h. im Bereich der Länge 69" jedem Zahn 70 eine Lücke der Verzahnung 59 gegenüberliegt, so daß ein kontinuierliches, störungsfreies Eingreifen der Zähne 70 in die Verzahnung 59 gewährleistet ist. Der entsprechende elektrischen Regel-bzw. Steuerkreis umfaßt eine Frequenz- und Phasenvergleichseinrichtung 85, der von einem Sensor 86 ein der Geschwindigkeit einer Aufnahme 44 auf dem Zwischenförderer 46 entsprechendes Signal zugeführt wird, und zwar zusammen mit einem weiteren, von dem Drehweggeber 78 gelieferten Signal, welch letzteres als Information die Umlaufgeschwindigkeit des Zahnriemens 69, aber auch die Positionierung der Zähne 70 in Abhängigkeit von der Zeit beinhaltet. Ebenso wie das von dem Drehweggeber 78 gelieferte Signal ist auch das Signal des Sensors 86 ein Impulssignal, welches von dem Sensor 86, z.B. durch die sich an diesen Sensor vorbeibewegende Verzahnung 59 der Aufnahme 44 gewonnen wird, so daß das von dem Sensor 86 gelieferte Signal als Information nicht nur die Geschwindigkeit der sich an diesem Sensor vorbeibewegenden Aufnahme 44, sondern auch die Positionierung der Zähne der Verzahnung 59 in Abhängigkeit von der Zeit enthält. Mit Hilfe eines von der Steuereinrichtung 85 gelieferten Signals wird der Generator 84 in seiner Frequenz und Phase so geregelt, daß nicht nur die Umlaufgeschwindigkeit des Zahnriemens 69 derjenigen Geschwindigkeit entspricht, mit der die betreffende Aufnahme 44 auch dem Zwischenförderer 46 bewegt wird, sondern der Zahnriemen 69 beim Einlaufen der Aufnahme 44 in den Hauptförderer 43 auch eine solche Stellung aufweist, daß ein störungsfreier, kontinuierlicher Eingriff der Zähne 70 in die Verzahnung 59 möglich ist.

Bei dem vorstehend in Zusammenhang mit den Figuren 17 und 18 beschriebenen modularen Aufbau des Transportsystems 48 können die Platine 60 und 64 von jeweils einem Hauptförderer 43 und einem Zwischenförderer 46 eine gemeinsame Platine sein, die dann die Oberseite des Rahmengestells 50 bilden.

Jede Förderstrecke 47 ist von einer Platte 87 gebildet, die auf ihrer Oberseite eine einen Führungsbogen bildende äußere, gekrümmte Führungsleiste 88 aufweist, die die äußere Begrenzung eines Führungskanals 89 bildet. Die innere Begrenzung des Führungskanals 89 ist bei der in der Fig. 16 dargestellten Ausführungsform von einem dem Zahnriemen 69 entsprechenden, eine geschlossene Schlaufe bildenden Zahnriemen 90 gebildet, der an dem Einlauf der Förderstrecke 47 und an dem Auslauf dieser Förderstrecke jeweils über ein frei drehbar an der Platine 87 vorgesehenes Zahnriemenrad 91 mit kleinem Durchmesser und im Bereich des kreisbogenförmig gekrümmten Teils der Förderstrecke 47 zwischen dem Einlauf und dem Auslauf über in Zahnriemenrad 92 geführt ist, welch letzteres einen wesentlich größeren Durchmesser, d.h. einen Durchmesser in der Form aufweist, daß dieses Zahnriemenrad 92 zusammen mit dem Zahnriemen 90 die innere Begrenzung des Führungskanales 89 bildet, der an dem bogenförmig gekrümmten Bereich der Förderstrecke 47 eine Breite aufweist, die etwas größer ist als die effektive Breite der Aufnahmen 44. Jede Aufnahme 44 wird am Einlauf der Förderstrecke 47 mit ihrer Verzahnung 59 von den außenliegenden Zähnen des wiederum mit einer doppelten Verzahnung versehenen Zahnriemens 90 erfaßt und in Transportrichtung B weiterbewegt, wobei auch im kreisbogenförmig gekrümmten Teil der Förderstrecke 47 der Zahnriemen 90 mit einigen Zähnen mit der Verzahnung 59 der jeweiligen Aufnahme 44 in Eingriff bleibt, die mit ihren an der Umfangsseite 56 vorgesehenen Rollen 54 an dem von der äußeren Führungsleiste 88 gebildeten Führungsbogen entlanggleitet. Bei der in der Fig. 16 gezeigten Ausführung der Förderstrecken 47, bei der die Aufnahmen 44 derart angeordnet sind, daß ihre mit der Verzahnung 59 versehenen Umfangsseiten 57 im Bereich der als Wendebogen ausgebildeten Förderstrecken 47 innen liegen, ist das Transportelement der Zahnriemen 90, der über das Zahnriemenrad 92 und eine dieses Zahnriemenrad tragende Welle 93, die mit ihrer Achse senkrecht zur den Oberflächenseiten der Platine 87 liegt, von einem nicht näher dargestellten Antriebsmotor angetrieben wird. Ist dieser Antriebsmotor beispielsweise entsprechend dem Antriebsmotor 77 mit einer entsprechenden Steuerung ausgebildet, so kann die Förderstrecke 47 auch die Funktion eines "Hauptförderers" für eine Arbeitsstation, nämlich für die Arbeitsstation 45e haben.

Anstelle des Zahnriemens 90 kann als Transportelement auch eine um die Achse der Welle 93 umlaufende Scheibe vorgesehen sein, die dem Boden des Führungskanales 89 bildet, auf welchem die Aufnahmen 44 mit ihrer Unterseite 44' aufliegen. Grundsätzlich ist es auch möglich, anstelle des Zahnriemens 90 als Transportelement ein mit einer Verzahnung am Umfang versehenes und dort vorzugsweise elastisch ausgebildetes Zahnrad oder ein an seinem Umfangelastisch ausgebildetes Rad vorzusehen, welches anstelle des Zahnriemenrades 92 auf der Welle 93 angeordnet ist und in ähnlicher Weise wie der Zahnriemen 90 mit der Verzahnung 59 der Aufnahmen 44 zusammenwirkt, wobei eine solche Förderstrecke 47 an ihrem Einlauf sowie an ihrem Auslauf noch ein von einem Transportband (entsprechend dem Transportband 36) oder von Transportriemen (entsprechend dem Transportriemen 63) gebildetes Transportelement besitzt. Die Förderstrecke 47 entspricht einem Wendebogen von 180°. Selbstverständlich kann die Förderstrecke auch einem Kreisbogen von weniger als 180°, beispielsweise von 90° oder weniger entsprechen.

Fig. 19 zeigt eine Aufnahme 101, die an ihrer Formgebung und Größe der Aufnahme 44 entspricht. Während jede Aufnahme 44 bzw. deren Platte 53 bevorzugt aus Metall gefertigt ist, ist die Aufnahme 101 einstückig mit allen ihren Elementen, auch einstückig mit Lagerzapfen 102 für die den Rollen 54 entsprechenden Rollen 103 aus einem hoch belastbaren und verschleiß festen Kunststoff mit hoher Maßhaltigkeit gefertigt. Die Rollen 103 sind dann bevorzugt aus einem Kunststoff hergestellt, der unter Umständen eine geringere Maßhaltigkeit, aber einen hohen Gleitwert aufweist.

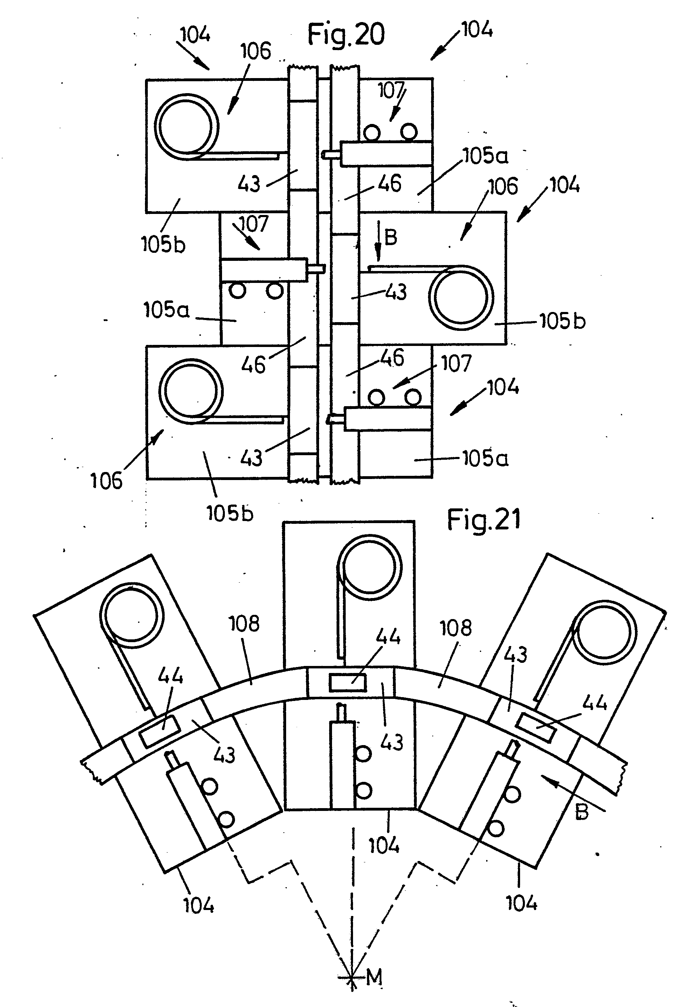

Die Fig. 20 und 21 zeigen eine Teillänge eines Transportsystems von Montage- bzw. Fertigungsautomaten, die wiederum jeweils unter Verwendung mehrere Module 104 zusammengestellt sind, wobei die Module 104 sich von den Modulen 49 im wesentlichen nur dadurch unterscheiden, daß der jeweilige Hauptförderer 43 einen etwas größeren Abstand von der benachbarten Schmalseite des Rahmengestells 15 aufweisen, so daß beidseitig von dem Hauptförderer 43 an der Oberseite des Rahmengestells ein Freiraum 105a bzw. 105b gebildet ist, wobei auf dem Freiraum 105b beispielsweise die Zuführungselemente 106 und an dem Freiraum 105 eine bewegliche Halterung 107 für Montagezangen usw. Platz finden. Die Module 104 schließen jeweils um 180° gegeneinander versetzt an, und zwar derart, daß die Module 104 mit dem Freiraum 105b jeweils seitlich über das Transportsystem wegstehen, so daß insbesondere die dortigen Teile Zuführungen 106 und andere Aggregate von drei Seiten her zugänglich sind. An die Hauptförderer 43 schließen wiederum geradlinige oder kurvengängige Zwischenförderer, beispielsweise die Zwischenförderer 46 und 47 an, wobei zumindest auf der in der Fig. 20 dargestellten Teillänge des Transportsystems bzw. des Montageautomaten jedes Modul 104 im Bereich des Freiraumes 105a von einem Zwischenförderer 49 überbrückt wird, der parallel zu dem Hauptförderer 43 dieses Moduls liegt und an seinen beiden Enden an den Hauptförderern 43 der beiden, den einem Modul 104 benachbarten Module befestigt ist.

Fig. 21 zeigt ein Transportsystem bzw. eine Montageeinrichtung, die unter Verwendung der Module 104 nach Art eines Rundtaktautomaten aufgebaut ist. Bei diesem Automaten sind die Module 104 um einen Mittelpunkt M bzw. um eine durch diesen Mittelpunkt verlaufende vertikale Maschinenachse derart aufgestellt, daß die Hauptförderer 43 jeweils in gleichen Winkelabständen um den Mittelpunkt M bzw. um die vertikale Maschinenachse verteilt sind und auch den gleichen radialen Abstand von dieser Achse aufweisen und außerdem die Hauptförderer 43 mit ihrer Längserstreckung tangential zu einer Kreislinie um den Mittelpunkt M liegen. Die Hauptförderer 43 der einzelnen Module 104 sind jeweils durch kurvengängige bzw. gekrümmte Zwischenförderer 108 miteinander verbunden, so daß die Hauptförderer 43 und Zwischenförderer 108 ein in sich geschlossenes, nahezu kreisförmiges Transportsystem ergeben. Die Anzahl der Aufnahmen 44 bzw. 101 ist bei dieser Ausführungsform gleich der Anzahl der Hauptförderer 43 bzw. der dort gebildeten Arbeitsstationen. Die Steuerung erfolgt dann beispielsweise so, daß in einem bestimmten Takt die Aufnahmen 44 bzw. 101 in allen Hauptförderern 43 über den anschließenden Zwischenförderer 108 an den in Transportrichtung B nächstfolgenden Hauptförderer 43 weiterbewegt werden. Werden die Aufnahmen 44 bzw. 101 hierbei in dem Hauptförderer 43 entsprechend beschleunigt, so können sich diese Aufnahmen in den nächstfolgenden Hauptförderer 43 hineinbewegen, ohne daß ein Antrieb für den Zwischenförderer 108 erforderlich ist. Die Zwischenförderer bilden somit bei dieser Ausführung nicht aktive Gleitoder Führungsstrecken. Der in der Fig. 21 dargestellte Montageautomat hat auch den Vorteil, daß an jeder von einem Hauptförderer 43 gebildeten Arbeitsstation die betreffende Aufnahme 44 bzw. 101 in Transportrichtung B unabhängig von den Aufnahmen an den übrigen Arbeitsstationen positioniert werden kann.

**Ansprüche**

1. Montageanlage für Bauteile oder Baugruppen, insbesondere für Klein- und Kleinsbauteile oder -Baugruppen, mit mehreren in räumlichem Abstand voneinander angeordneten Arbeitsstationen, mit mehreren Aufnahmen (3, 44) für Werkstücke oder Werkstückteile (W) sowie mit einem Transportsystem (48), mit welchem die Aufnahmen an den Arbeitsstationen (1a - 1i; 45a - 45d) nacheinander vorbeibewegt werden, dadurch gekennzeichnet, daß das Transportsystem von an den Arbeitsstationen (1a - 1i; 45a - 45d) vorgesehenen Hauptförderern (9, 43) sowie von zwischen den Arbeitsstationen (1a - 1i; 45a - 45e) vorgesehenen Hilfsförderstrecken oder Zwischenförderern (10, 11; 46, 47; 108) gebildet ist, und daß jeder Hauptförderer (9, 43) mit eigenem Antrieb oder Antriebssystem (13, 14; 77) als voll funktionsfähiges Element ausgebildet ist.

2. Montageanlage nach Anspruch 1 oder 2, dadurch gekennzeichnet, daß die Hilfsförderstrecken oder Zwischenförderer (10, 11; 46, 47; 108) geradlinige oder gekrümmte Förderer, vorzugsweise solche mit eigenem Antrieb oder Antriebssystem sind, wobei vorzugsweise sämtliche geradlinige oder sämtliche gekrümmte Hilfsförderstrecken oder Zwischenförderer (10, 11; 46, 47; 108) jeweils gleich ausgebildet sind.

3. Montageanlage nach Anspruch 1 oder 2, dadurch gekennzeichnet, daß jeder Hauptförderer (9, 43) sowie jeder Zwischenförderer (10, 11; 46, 47) jeweils ein eigenes mit einem elektrischen oder elektronischen Steuerteil versehenes Antriebssystem (13, 14; 77, 96) aufweist,
wobei vorzugsweise die Fördergeschwindigkeit jedes Hauptförderers (9, 43) und/oder jedes Zwischenförderers (10, 11; 46, 47) in Abhängigkeit von wenigstens einem sich in Förderrichtung (B) anschließenden Zwischenförderer (10, 11; 46, 47) und/oder Hauptförderer (9, 43) bzw. in Abhängigkeit von dessen Fördergeschwindigkeit gesteuert wird,
und/oder wobei vorzugsweise die Antriebe (13, 14, 77, 96) der Hauptförderer (9, 43) sowie der Zwischenförderer (10, 11; 46, 47) bzw. deren Fördergeschwindigkeiten in vorgegebenen Stufen steuerbar bzw. veränderbar sind, und zwar vorzugsweise derart, daß ab einer vorgegebenen Änderung der Fördergeschwindigkeit eines Hauptförderers (9, 43) oder eines Zwischenförderers (10, 11; 46, 47) die an diesem Hauptförderer (9, 43) oder Zwischenförderer (10, 11; 46, 47) erfolgten Änderungen der Fördergeschwindigkeit zeitlich versetzt auch an den in Förderrichtung (B) vorausgehenden Hauptförderern (9, 43) und/oder Zwischenförderern (10, 11; 46, 47) erfolgen.

4. Montageanlage nach einem der Ansprüche 1-3, dadurch gekennzeichnet, daß jeder Hauptförderer (9, 43) einen an mindestens einer Seite von wenigstens einem Transportelement (18, 24; 19, 25; 69, 72 - 75) begrenzten Führungskanal (65) für die Aufnahmen (3, 44, 101) bildet, und daß jede Aufnahme (3, 44, 101) an dem Hauptförderer (9, 43) formschlüssig mit dem wenigstens einen Transportelement (18, 24; 19, 25; 69, 72 - 75) in Eingriff steht, welches vorzugsweise von wenigstens einem über Rollen oder Räder (18, 19; 72, 75) geführten, endlos umlaufenden riemen-oder bandartigen Element (24, 25; 69) gebildet ist.

5. Montageanlage nach Anspruch 4, dadurch gekennzeichnet, daß der Führungskanal beidseitig von wenigstens einem Transportelement (18, 24; 19, 25) begrenzt ist, wobei vorzugsweise jedes Transportelement von mehreren Rollen (18, 19) und/oder von einem über derartige Rollen geführten, endlos umlaufenden riemen- oder bandartigen Element (24, 25) gebildet ist, und wobei vorzugsweise die Rollen (18, 19) und/oder die einander zugewendeten Längen der band- oder riemenartigen Elemente (24, 25) in jeweils eine an der jeweiligen Aufnahme (3) vorgesehene, sich in Transportrichtung (B) erstreckenden nutenförmigen Ausnehmung (6) hineinreichen,
wobei vorzugsweise die nutenförmigen Ausnehmungen (6) einen sich verengenden oder V-förmigen Querschnitt aufweisen und die Transportelemente (18, 24; 19, 25) an ihrem mit der jeweiligen Aufnahme (3) zusammenwirkenden Bereich eine dem Querschnitt der nutenförmigen Ausnehmungen (6) entsprechenden Querschnittsform besitzen, und/oder wobei vorzugsweise die das jeweilige Transportelement bildenden Rollen (18, 19) bezogen auf ihre Drehachse (22) kegelstumpfförmig oder doppelkegelstumpfförmig ausgebildet sind, und/oder wobei vorzugsweise die die Transportelemente bildenden riemen- oder bandartigen Elemente (24, 25) einen unterschiedlichen Querschnitt derart besitzen, daß jede Aufnahme bei zwischen dieser und den Rollen (18, 19) elastische zusammengedrückten band- oder riemenartigen Elementen (24, 25) gegen die Rollen (18) eines Transportelementes unmittelbar anliegt und durch das band- oder riemenartige Element (25) des anderen Transportelementes in einem geringen Abstand von den dortigen Rollen (19) gehalten ist.

6. Montageanlage nach Anspruch 4 oder 5, dadurch gekennzeichnet, daß das das Transportelement bildende riemen-oder bandartige Element ein Zahnriemen (69) ist, welcher als geschlossene Schlaufe über Zahnriemenräder (72 - 75) geführt ist und sowohl an der Außenseite als auch an der Innenseite der von ihm gebildeten Schlaufe eine Verzahnung (70, 71) aufweist, und daß die Aufnahmen (44, 101) jeweils an wenigstens einer in Transportrichtung (B) verlaufenden Seite (57) mit einer Gegenverzahnung (59) versehen sind, die bei einer in einem Hauptförderer (43) angeordneten Aufnahme (44, 101) mit der Verzahnung (70) des Zahnriemens (69) in Eingriff steht.

7. Montageanlage nach Anspruch 6, dadurch gekennzeichnet, daß der Führungskanal (65) des Hauptförderers (43) an der dem Zahnriemen (69) gegenüberliegenden Seite von einer Führung (66) begrenzt ist, die eine Anlagefläche für die jeweilige, im Hauptförderer (43) befindliche Aufnahme (44) bildet, gegen die die Aufnahme (44, 101) mit vorgegebener Kraft angedrückt anliegt.

8. Montageanlage nach Anspruch 6 oder 7, dadurch gekennzeichnet, daß der Zahnriemen (69) eine sich an einer Seite des Führungskanals (65) erstreckende erste Länge (69') bildet, die sich vorzugsweise gegen ein bevorzugt elastisch bzw. federnd ausgebildetes Abstützelement (79) abstützt.

9. Montageanlage nach Anspruch 8, dadurch gekennzeichnet, daß am Einlauf jedes Hauptförderers (43) der Zahnriemen (69) eine zweite, der ersten Länge (69') in Förderrichtung (B) vorauseilende Länge (69'') bildet, die mit der Förderrichtung (B) einen sich entgegen dieser Förderrichtung öffnenden spitzen Winkel (a) einschließt, wobei vorzugsweise auch am Auslauf jedes Hauptförderers (43) vom Zahnriemen (69) eine derartige zweite, dort der ersten Länge (69') in normaler Förderrichtung (B) nacheilende Länge gebildet ist, die mit dieser Förderrichtung (B) einen sich in Förderrichtung öffnenden spitzen Winkel (a) einschließt, wobei vorzugsweise zumindest der erste Zahn (59') der die Gegenverzahnung (59) an den Aufnahmen (44, 101) bildenden Zähne abgerundet und/oder schmäler als die übrigen Zähne dieser Gegenverzahnung (59) ausgebildet ist.

10. Montageanlage nach einem der Ansprüche 1 - 9, dadurch gekennzeichnet, daß der Zahnriemen (69) von einem Motor, vorzugsweise von einem Schrittmotor (77) oder Gleichstromservomotor angetrieben wird, der seinerseits von einer elektrischen Steuereinrichtung (84) angesteuert wird, und daß die elektrische Steuereinrichtung (84) beim Überschreiten eines vorgegebenen Drehmomentes des den Zahnriemen (69) antreibenden Motors (77) die Drehrichtung dieses Motors für ein vorgegebenes, kurzes Zeitintervall umkehrt.

11. Montageanlage nach einem der Ansprüche 1 - 10, dadurch gekennzeichnet, daß am Einlauf des Hauptförderers (43) ein erster Sensor (81) vorgesehen ist, der ein erstes Signal liefert, wenn eine Aufnahme (44, 101) an diesen ersten Sensor (81) gelangt, und daß der Hauptförderer (43) einen zweiten Sensor, vorzugsweise einen Drehweggeber (78) aufweist, der ein zweites Signal in Form einer Impulsfolge liefert, in welcher jeder Impuls einer bestimmten, von dem wenigstens einen Transportelement (69) zurückgelegten Wegstrecke entspricht, und daß der erste Sensor (81) sowie der zweite Sensor (78) mit einer elektronischen Steuer- und Regeleinrichtung (80, 82, 83) verbunden sind, die nach dem Vorliegen des ersten Signals und/oder nach Erreichen einer vorgegebenen Null-Stellung der jeweiligen Aufnahme (44, 101) die Anzahl der Impulse des zweiten Signales erfaßt und bei einer bestimmten, vorgegebenen oder vorgewählten Anzahl an Impulsen den Antrieb (77) des wenigstens einen Transportelementes (69) abschaltet.

12. Montageanlage nach einem der Ansprüche 1 - 11, dadurch gekennzeichnet, daß an wenigstens einem einem Hauptförderer (43) in Förderrichtung (B) vorausgehenden Zwischenförderer (46) mindestens ein dritter Sensor (86) vorgesehen ist, der an eine Steuer- oder Regeleinrichtung, vorzugsweise an eine Frequenz- und Phasenregeleinrichtung (85) ein drittes Signal liefert, welches in der Steuer-und Regeleinrichtung (85) mit einem die Geschwindigkeit und Stellung des wenigstens einen Transportelementes (69) berücksichtigendem Signal, vorzugsweise mit dem zweiten Signal des zweiten Sensors (78) verglichen wird, und daß die Steuer- und Regeleinrichtung (85) an ihrem Ausgang ein die Geschwindigkeit und/oder Phase des Antriebes (77) des wenigstens einen Transportelementes (69) steuerndes Steuersignal liefert.

13. Montageanlage nach einem der Ansprüche 1 - 12, dadurch gekennzeichnet, daß die Zwischenförderer (10, 11; 46, 47) jeweils von einer Förderstrecke mit einem geradlinigen oder kurvengängigen Transportelement (36, 42; 90) gebildet sind, auf welchem die Aufnahmen (3) mit ihrer Unterseite (44') aufliegen oder mit welchem die Aufnahmen (44, 101) an einer Eingriffsfläche (59) mitgeführt werden, welche vorzugsweise von der Gegenverzahnung gebildet ist.

14. Montageanlage nach einem der Ansprüche 1 - 13, dadurch gekennzeichnet, daß das Transportsystem (48) von wenigstens zwei, aus wenigstens einem Hauptförderer (43) und einem Zwischenförderer (46) bestehenden Abschnitten (48', 48") gebildet ist, und daß quer zur Transportrichtung (B) wenigstens ein Hauptförderer (43) eines Abschnittes (48') einem Zwischenförderer (46) des anderen Abschnittes (48") gegenüberliegt

wobei vorzugsweise das Transportsystem (48) aus mehreren, gleichartigen Modulen (49, 104) besteht, die an einem Rahmengestell (50) jeweils einen Hauptförderer (43) aufweisen,

und/oder wobei vorzugsweise zwischen dem Hauptförderer (43) und dem Zwischenförderer (46) und/oder seitlich von diesen Förderern ein Freiraum (51; 105a, 105b) für die Anordnung der die jeweilige Arbeitsstation (45a - 45e) bildenden Aggregate und Elemente (106, 107) vorgesehen ist.

15. Montageanlage nach einem der Ansprüche 1 bis 14, dadurch gekennzeichnet, daß der Hauptförderer (47) für wenigstens eine Arbeitsstation (45e) kurvengängig bzw. gekrümmt ausgebildet ist.

Fig.1

Fig.6

# Fig.2

1b

1c

9

14

15

10

13

9

15

# Fig.5

32

8

5

34

3

35

4

7

4'

8

7

33

5

5

# Fig.4

20 18 23

16

17

21

6 4' 4

24

3 6

4"

16" 16

23 19 9

20

25

21

17

31

30

Fig.3

Fig.7

Fig.8

Fig.9

Fig.10

Fig.11

Fig.14

Fig.17

Fig.12

58
59'
44
57
B
59
71
70
α
69"
43

EP 0 340 639 A1

Fig.13

Fig.15

95  62  61  62'  46  94

94  60  62"  95

98  97  96

Fig.19  101

59

103  102

Fig.18  52

51  43

C

50  49

EP 0 340 639 A1

Fig.16

Fig.20

Fig.21

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 255 027 (STRIBEL) <br> * Insgesamt * <br> --- | 1-3 | B 23 P 21/00 <br> B 23 Q 7/14 <br> B 65 G 35/06 |
| X | EP-A-0 115 357 (PRODEL) <br> * Insgesamt * <br> --- | 1,2 | |
| A | FR-A-2 568 861 (SORMEL) <br> * Insgesamt * <br> --- | 1,2 | |
| A | DE-A-2 839 530 (HITACHI) <br> * Insgesamt * <br> --- | 1,2 | |
| A | FR-A-2 228 012 (OSSBAHR) <br> * Figuren * <br> --- | 4,5 | |
| A | EP-A-0 062 267 (PRODUTEC) <br> * Figuren * <br> ----- | 6 | |

| RECHERCHIERTE SACHGEBIETE (Int. Cl.4) |
|---|
| B 23 P <br> B 23 Q <br> B 65 G |

Der vorliegende Recherchenbericht wurde für alle Patentansprüche erstellt

| Recherchenort | Abschlußdatum der Recherche | Prüfer |
|---|---|---|
| DEN HAAG | 07-07-1989 | RIS M. |